(19) Europäisches Patentamt
European Patent Office
Office européen des brevets

(11) **EP 3 207 361 B1**

(12) **FASCICULE DE BREVET EUROPEEN**

(45) Date de publication et mention
de la délivrance du brevet:
**01.04.2020 Bulletin 2020/14**

(51) Int Cl.:
***G01N 21/90*** *(2006.01)*

(21) Numéro de dépôt: **15787268.0**

(86) Numéro de dépôt international:
**PCT/FR2015/052762**

(22) Date de dépôt: **14.10.2015**

(87) Numéro de publication internationale:
**WO 2016/059343 (21.04.2016 Gazette 2016/16)**

(54) **PROCÉDÉ, DISPOSITIF ET LIGNE D'INSPECTION POUR VISUALISER LA PLANÉITÉ D'UNE SURFACE DE BAGUE DE RÉCIPIENT**

VERFAHREN, VORRICHTUNG UND INSPEKTIONSLINIE, UM DIE FLACHHEIT EINER RINGOBERFLÄCHE EINES BEHALTERS SICHTBARZUMACHEN

METHOD, DEVICE AND INSPECTION LINE FOR VISUALIZING THE FLATNESS OF A RING SURFACE OF A CONTAINER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2014 FR 1459977**

(43) Date de publication de la demande:
**23.08.2017 Bulletin 2017/34**

(73) Titulaire: **Tiama**
**69390 Vourles (FR)**

(72) Inventeurs:
• **LECONTE, Marc**
**F-69700 Loire sur Rhone (FR)**
• **OLLIVIER, Michel**
**F-35690 Acigne (FR)**

(74) Mandataire: **Cabinet Beau de Loménie**
**51 avenue Jean Jaurès**
**BP 7073**
**69301 Lyon Cedex 07 (FR)**

(56) Documents cités:
**EP-A1- 0 657 732        DE-A1- 2 916 361**
**DE-U1-202012 104 043    US-A- 4 606 635**

# Description

L'invention concerne le domaine de l'inspection des récipients, notamment en verre, et plus précisément le contrôle de la planéité de la surface de bague de tels récipients.

La surface de bague est la surface supérieure ou l'arête supérieure de la bague du récipient. De forme annulaire autour d'un axe central théorique de la bague, la surface de bague est plus ou moins épaisse selon une direction radiale à l'axe central théorique. En théorie, cette surface est plane dans un plan perpendiculaire à l'axe central théorique, en ce sens qu'elle présente au moins une ligne de contact continue sur 360 ° autour de l'axe avec ce plan, et elle est parfaitement circulaire. Toute en étant plane au sens ci-dessus, son profil en sections par un plan radial contenant l'axe central théorique peut avoir des formes différentes : le profil peut être plat, arrondi, en V inversé, etc...

Dans de nombreuses applications, la surface de bague est celle qui vient en contact avec le joint du couvercle ou de la capsule. Lorsque la surface de bague n'est pas plane, des fuites seront possibles après fermeture. Il est donc important de connaitre les défauts de planéité de la surface de bague. Ces défauts de planéité peuvent être analysés, en un point donné de la surface de bague, comme une différence de hauteur entendue dans ce texte comme une différence de position, selon une direction parallèle à l'axe central théorique de la bague du récipient, entre un point donné de la surface de bague réelle du récipient et le point correspondant d'une surface théorique de bague. Ces deux points sont correspondants en ce que, dans un système de coordonnées cylindriques, centré sur l'axe central théorique, les points correspondants ont la même coordonnée angulaire, et appartiennent, pour l'un à la surface de bague réelle, et pour l'autre à la surface de bague théorique. Cette surface théorique est donc plane par rapport à un plan de référence perpendiculaire à l'axe central théorique. Ce plan de référence peut être lié au récipient considéré, et peut par exemple correspondre à la hauteur du point le plus haut de la surface de bague réelle, à la hauteur du point le plus bas de la surface de bague réelle, à une hauteur moyenne de la surface de bague sur son étendue angulaire, etc.... Le plan de référence peut aussi être défini indépendamment du récipient, en référence par exemple à un dispositif de visualisation, de contrôle ou de mesure.

Les défauts de planéité de la surface de bague sont souvent distingués en au moins deux types. Les défauts de type « manque de verre » sont liés à des problèmes de remplissage du moule de bague par le verre fondu lors de la fabrication. Ils se caractérisent par des écarts de hauteur qui s'étendent sur une faible amplitude angulaire autour de l'axe théorique. Les défauts de types « bague voilée » sont des écarts de hauteur généralement moins marqués, qui s'étendent sur une plus grande amplitude angulaire autour de l'axe théorique, mais sont néanmoins des défauts gênants, souvent dus à des affaissements, à des problèmes lors de l'extraction des articles du moule, ou à des problèmes thermiques.

Actuellement, les défauts de planéité sont détectés principalement par un système dit « à cloche » par détection de fuites gazeuses. On mesure la fuite résiduelle lorsqu'une surface métallique plane est appuyée sur la bague. L'inconvénient est que le contrôle ne donne pas d'élément permettant d'évaluer l'ampleur du défaut, mais permet uniquement d'obtenir une indication binaire (fuite / pas de fuite) indicative de la planéité ou non de la surface. Un tel système nécessite des moyens mécaniques de déplacement relatif du récipient par rapport au dispositif qui sont non seulement coûteux mais qui de surcroit ralentissent la cadence de la ligne d'inspection : montée et baisse de la cloche, immobilisation temporaire de l'article sous la cloche, etc.... Par ailleurs il y a un intérêt réel à supprimer tout contact avec la bague de l'article pour éviter des risques de casse ou de pollution.

Sont connus par ailleurs des systèmes de vision dans lesquels les bagues sont observées selon au moins deux vues en plongée ou contreplongée. Un éclairage diffus situé à l'opposé des caméras par rapport aux articles éclaire l'article à contrôler en transmission. L'inconvénient de ce système est qu'il nécessite au moins deux caméras et deux sources lumineuses et éventuellement deux optiques télécentriques et leurs supports et réglages. L'ensemble est coûteux, et il nécessite des longs chemins optiques, ce qui se traduit par un encombrement important.

Pour remédier à ces inconvénients, il a été proposé d'utiliser, comme exposé ci-dessus, des caméras déjà prévues pour effectuer un autre contrôle du récipient, par exemple, dans le cas de bouteilles en verre transparent, un contrôle d'aspect à l'épaule. Cependant, cela oblige à choisir des positionnements du dispositif de contrôle qui ne peuvent être qu'un compromis entre les réglages pour détecter les défauts dans la zone de l'épaule et les réglages pour détecter les défauts géométriques de la surface de bague. Ces compromis ne sont satisfaisant ni pour la mesure initialement visées par ces caméras, ni pour la mesure de planéité que l'on essaie de leur faire effectuer.

En multipliant les angles de vues, notamment en combinant des vues similaires sous des angles de plongée ou contreplongée différents, il est également possible de mesurer en 3D des portions de la bague et de réunir ensuite ces mesures pour reconstituer par calcul la géométrie totale de la surface de bague. Elle utilise l'acquisition de plusieurs images optiques. Ces images optiques sont ensuite combinées deux à deux par des algorithmes de mise en correspondance de points par paires, à partir desquelles sont calculés par triangulation des points réels en coordonnées 3D. La technique est celle de la stéréovision aux d'algorithmes complexes. Plusieurs paires de vues de stéréovision sont nécessaires, ce qui nécessite donc par exemple 4 ou 6 caméras. Ces systèmes peuvent être précis, mais ils sont très coûteux et très encombrants. En raison des nombreux paramètres, la précision n'est pas conservée en exploitation sur une longue durée.

Le document US-6.172.748 décrit un dispositif comportant plusieurs sources lumineuses distinctes qui éclairent la bague par en-dessous, c'est-à-dire depuis un point situé en dessous d'un plan perpendiculaire à l'axe de la bague et tangent à la surface de bague. Le dispositif comporte plusieurs miroirs distincts qui procurent chacun une image d'un secteur angulaire seulement de la bague. De plus, même si les images se recoupent, il y a entre les images une discontinuité angulaire azimutale du fait que, à un éventuel point de recoupement des deux images, il y a rupture du point vue entre le point de recoupement dans chacune des images. Cela rend nécessaire une reconstruction informatique de l'image qui nécessite des algorithmes complexes.

Les documents DE-29.16.361, US-4.606.635 et EP-0.657.732 décrivant d'autres dispositifs selon l'art antérieur.

Un objectif de l'invention est donc de proposer un dispositif de visualisation des défauts de planéité d'une surface de bague qui soit plus simple que les systèmes existants.

Dans ce but, l'invention propose un procédé de visualisation de la planéité d'une surface de bague réelle d'un récipient, la surface de bague ayant une géométrie théorique plane et annulaire ou circulaire autour d'un axe central théorique, du type comportant les étapes consistant:

- à éclairer la surface de bague réelle du récipient à l'aide d'un faisceau lumineux incident périphérique,
- à former, par l'intermédiaire d'un système optique une image plane de la surface de bague du récipient, sur un capteur photoélectrique bidimensionnel, caractérisé en ce que :
- le faisceau lumineux incident périphérique comprend des rayons lumineux radiaux contenus dans un plan radial contenant l'axe central théorique, lesdits rayons radiaux étant dirigés vers l'axe central théorique;
- le faisceau lumineux incident périphérique éclaire la surface de bague par au-dessus, et des rayons radiaux du faisceau lumineux incident sont réfléchis par réflexion spéculaire sur la surface de bague,
- en ce que l'étape consistant à former un image plane comporte une transformation géométrique optique qui convertit la surface de bague réelle en une image de surface de bague, cette transformation convertissant théoriquement la surface de bague théorique en une image théorique de surface de bague,
- en ce que la transformation géométrique optique convertit une différence de hauteur réelle selon la direction de l'axe central théorique, entre un point considéré de la surface de bague réelle et un point correspondant la surface de bague théorique, en un décalage radial image, sur l'image, du point image de l'image de surface de bague du récipient par rapport au point image correspondant de l'image théorique de surface de bague ;
- et en ce que, dans l'image plane, le décalage radial image correspondant à une différence de hauteur réelle unitaire est supérieur au décalage radial image correspondant à un décalage radial réel de même dimension entre ledit point considéré de la surface de bague réelle et un point correspondant la surface de bague théorique.

Selon d'autres caractéristiques optionnelles d'un tel procédé :

- le décalage radial image correspondant à une différence de hauteur réelle unitaire est au moins trois fois supérieur au décalage radial image correspondant à un décalage radial réel de même dimension entre un point considéré de la surface de bague réelle et un point correspondant à la surface de bague théorique.
- le procédé comporte l'étape d'observer la surface de bague réelle, par le système optique, sous un angle d'élévation d'observation inférieur à 25° par rapport à un plan perpendiculaire à l'axe central théorique.
- le procédé comporte l'étape d'observer la surface de bague réelle, par le système optique, sous un angle d'élévation d'observation inférieur à 18,43° par rapport à un plan perpendiculaire à l'axe central théorique.
- le système optique définit un champ d'observation périphérique qui observe la surface de bague selon des rayons d'observation radiaux qui sont contenus dans un plan radial contenant l'axe central théorique et qui forment par rapport à un plan perpendiculaire à l'axe central théorique un angle central théorique inférieur à 25°.
- l'angle d'élévation d'observation est inférieur à 18,43° par rapport à un plan perpendiculaire à l'axe central théorique.
- le système optique comporte une surface primaire de réflexion réflexion, la surface primaire de réflexion réflexion étant une surface de révolution axée sur l'axe central théorique et agencée pour réfléchir directement ou indirectement des rayons lumineux, provenant de la surface de bague réelle sous l'angle d'observation, en direction du capteur.
- l'étape consistant à former une image plane inclut la formation optique d'une image bidimensionnelle complète et continue de la surface de bague réelle.
- le faisceau lumineux incident périphérique comporte, dans un même plan radial, des rayons radiaux non parallèles.
- le faisceau incident éclaire la surface de bague sous une incidence telle que, au point de réflexion d'un rayon incident, dont le rayon réfléchi par la surface de bague réelle est vu par le capteur, la normale à la surface de bague forme un angle inférieur à 30° par rapport à la direction de l'axe central théorique.

L'invention concerne aussi un procédé de détermination de la planéité d'une surface de bague réelle d'un récipient, la surface de bague ayant une géométrie théorique plane et annulaire autour d'un axe central théorique, caractérisé en ce que le procédé comporte le procédé de visualisation ayant l'une des caractéristiques précédentes, et en ce que le procédé comporte une étape de détermination comportant la détermination d'un décalage radial image entre une ligne représentative de l'image de la surface de bague et une ligne théorique représentative de l'image théorique de surface de bague.

Dans un tel procédé, la ligne représentative de l'image de la surface de bague peut être l'image, formée par le système optique sur le capteur, de la réflexion du faisceau incident sur la surface de bague.

L'invention concerne encore un dispositif de visualisation de la planéité d'une surface de bague réelle d'un récipient, la surface de bague ayant une géométrie théorique plane et annulaire ou circulaire autour d'un axe central théorique, du type dans lequel le dispositif présente une zone d'installation d'un récipient, cette zone d'installation ayant un axe d'installation, du type comprenant :

- un système d'éclairage apte à fournir un faisceau lumineux incident périphérique comprenant des rayons radiaux contenus dans un plan radial contenant l'axe d'installation, lesdits rayons radiaux étant dirigés vers l'axe d'installation,
- un capteur photo électrique bidimensionnel,
- un système optique interposé entre la zone d'installation du récipient et le capteur apte à former sur le capteur une image de la surface de bague d'un récipient placé dans la zone d'installation,

et du type dans lequel le système d'éclairage, le capteur et le système optique sont agencés au-dessus de la zone d'installation,
caractérisé en ce que le système optique définit un champ d'observation périphérique qui observe la surface de bague selon des rayons d'observations radiaux qui sont contenus dans un plan radial contenant l'axe d'installation, et qui forment par rapport à un plan perpendiculaire à l'axe d'installation un angle d'élévation d'observation inférieur à 25 degrés,
et en ce que le système d'éclairage comprend une source lumineuse axée sur l'axe d'installation et présentant un diamètre supérieur au diamètre de la surface de bague.

Selon d'autres caractéristiques optionnelles d'un tel dispositif :

- le dispositif comporte un capteur photoélectrique bidimensionnel unique sur lequel est formée une image complète et continue de la surface de bague réelle.

- le dispositif comporte une surface primaire de réflexion, la surface primaire de réflexion étant une surface de révolution axée sur l'axe d'installation et agencée pour réfléchir directement ou indirectement des rayons lumineux, provenant de la surface de bague réelle sous l'angle d'élévation d'observation, en direction du capteur.
- La surface primaire de réflexion réfléchit indirectement des rayons lumineux en direction du capteur, et le dispositif comporte, entre la surface primaire de réflexion et le capteur, au moins une seconde surface de réflexion.
- La surface primaire de réflexion comporte une surface de révolution, tournée à l'opposé de l'axe d'installation, et présentant un petit diamètre et un grand diamètre tous les deux inférieurs au diamètre le plus petit de la surface de bague théorique.
- La surface primaire de réflexion est une surface tronconique convexe et présente un demi-angle au sommet égal à 45° moins la moitié de l'angle d'élévation d'observation.
- La surface primaire de réflexion comporte une surface de révolution, tournée vers l'axe d'installation, présentant un petit diamètre et un grand diamètre tous les deux supérieurs au diamètre le plus grand de la surface de bague théorique de manière à renvoyer, en direction de l'axe d'installation, des rayons lumineux, provenant de la surface de bague réelle sous l'angle d'élévation d'observation, lesdits rayons étant interceptés par une surface de réflexion de renvoi qui comporte une surface de révolution tournée à l'opposé de l'axe d'installation de manière à renvoyer les rayons en direction du capteur.
- La trajectoire des rayons entre la surface primaire de réflexion et la surface de réflexion de renvoi est perpendiculaire à l'axe d'installation.
- La surface de réflexion de renvoi comporte une surface de révolution tronconique convexe qui est axée sur l'axe d'installation et qui présente un demi-angle au sommet de 45°.
- Le dispositif comporte, entre le capteur et la surface primaire de réflexion, un système optique télécentrique.
- Le faisceau périphérique incident, comprend, dans un même plan radial, des rayons radiaux non parallèles.
- La source lumineuse est une source annulaire de révolution axée sur l'axe d'installation.
- Le dispositif comprend un boîtier incorporant le capteur, le système objectif une surface de réflexion primaire et éventuellement une surface de réflexion de renvoi.

L'invention concerne de plus un ligne d'inspection de récipients présentant une surface de bague, du type dans laquelle des récipients sont déplacés sur une ligne de convoyage par un convoyeur qui transporte les récipients selon une direction de déplacement horizontale perpendiculaire à un axe central théorique des récipients qui présentent ainsi leur surface de bague dans un plan horizontal tourné vers le haut, caractérisée en ce que l'installation comporte un dispositif ayant l'une quelconque des caractéristiques précédentes, qui est agencé sur l'installation avec son axe d'installation en position verticale, de telle sorte que le champ d'observation et le faisceau lumineux incident sont orientés vers le bas, vers la zone d'installation qui se situe entre le dispositif et un organe de transport du convoyeur.

Dans une telle ligne d'inspection, le convoyeur peut amener les récipients de manière à ce que leur axe central théorique coïncide avec l'axe d'installation, et, au moment de cette coïncidence, une image est acquise grâce au dispositif, sans contact du dispositif avec le récipient.

Diverses autres caractéristiques ressortent de la description faite ci-dessous en référence aux dessins annexés qui montrent, à titre d'exemples non limitatifs, des formes de réalisation de l'objet de l'invention.

- Les **Figures 1A** et **1B** sont des vues schématiques en section axiale illustrant un dispositif selon l'invention pour la mise en œuvre d'un procédé selon l'invention, sur lesquelles sont illustrées, sur la **Figure 1A,** des rayons d'observations illustrant la vision du capteur photoélectrique et, sur la **Figure 1B,** la trajectoire de rayons incidents provenant de la source lumineuse et réfléchis par la surface de bague d'un récipient vers le capteur au travers du système optique.
- La **Figure 1C** est une vue schématique en perspective du mode de réalisation des **Figures 1A** et **1B.**
- La **Figure 2A** est une vue similaire à celle de la **Figure 1A,** illustrant un second dispositif selon l'invention pour la mise en œuvre d'un second procédé selon l'invention.
- La **Figure 2B** est une vue similaire à celle de la **Figure 1B,** illustrant une variante du second dispositif selon l'invention.
- La **Figure 3** est un schéma illustrant comment, dans le dispositif et le procédé de la **Figure 2A,** la transformation géométrique optique convertit une différence de hauteur réelle, selon la direction de l'axe central théorique, entre un point de la surface de bague réelle et le point correspondant sur la surface de bague théorique, en un décalage radial image, sur l'image, du point associé de l'image de surface de bague de récipient par rapport au point associé de l'image théorique de surface de bague.
- La **Figure 4** est un schéma illustrant une variante du dispositif et du procédé de la **Figure 2A,** dans laquelle le système optique n'est pas télécentrique.
- Les **Figures 5A** et **5B** sont des vues schématiques illustrant deux exemples d'images acquises dans un procédé et un dispositif selon l'invention.
- La **Figure 6** est une vue schématique d'une installation d'inspection de récipients comprenant un dispositif selon l'invention.

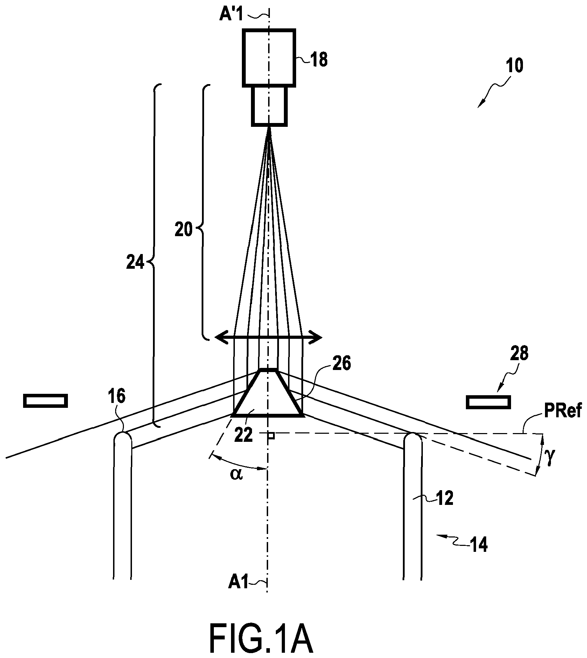

On a illustré sur les **Figures 1A** à **1C** un dispositif de visualisation de la planéité d'une surface de bague réelle d'un récipient, ce dispositif permettant la mise en œuvre d'un procédé selon l'invention. On a illustré sur les **Figures 1A** à **1C** uniquement la partie supérieure de la bague **12** d'un récipient **14.** Un récipient **14** est défini comme un contenant creux définissant un volume intérieur qui est fermé sur toute sa périphérie volumique sauf au niveau d'une bague supérieure **12** ouverte à une extrémité.

Par commodité, et uniquement à titre de définition arbitraire, il sera en effet considéré que le récipient comporte un axe central théorique **A1,** défini comme étant l'axe central théorique de sa bague **12.** Il sera aussi considéré arbitrairement que la bague est agencée à l'extrémité supérieure du récipient. Ainsi, dans le présent texte, les notions de haut, bas, supérieur et inférieur ont une valeur relative correspondant à l'orientation du dispositif **10** et du récipient **14** tels que représentés sur les figures. Toutefois, on comprend que l'invention pourrait être mise en oeuvre avec une orientation absolue indifférente dans l'espace, dans la mesure où les différents composants restent agencés avec le même agencement relatif.

La bague **12** du récipient est cylindrique de révolution autour de l'axe **A1.** Le corps du récipient, non représenté, peut être aussi un volume de révolution ou non. La bague **12** est reliée par son extrémité inférieure (non représentée) au reste du corps du récipient, tandis que son autre extrémité libre, dite supérieure par choix arbitraire dans le cadre de la présente description, se termine par une surface de bague **16.** La surface de bague **16** est théoriquement plane et parallèle à un plan perpendiculaire à l'axe **A1,** en ce sens qu'elle présente au moins une ligne de contact continue à 360° autour de l'axe central théorique avec un tel plan, et elle est théoriquement circulaire ou annulaire dans ce plan. Dans le présent texte, on distinguera d'une part la surface de bague réelle du récipient, et d'autre part une surface théorique de bague. Cette surface théorique de bague est donc une surface plane dans un plan de référence perpendiculaire à l'axe central théorique **A1.** Ce plan de référence peut être défini comme lié au récipient considéré, tel le plan de référence **PRef** de la Figure **1A** qui est tangent à un point de la surface de bague réelle **16,** par exemple le point le plus haut selon la direction de l'axe central théorique **A1.** Alternativement, ce plan de référence peut par exemple être situé à la hauteur du point le plus bas de la surface de bague réelle, à une hauteur moyenne de la surface de bague sur son étendue angulaire, etc.... Le plan de référence peut aussi être défini indépendamment du récipient, en référence par exemple à l'un des éléments du dispositif de visualisation **10,** par exemple au niveau d'une surface inférieure d'un boîtier du dispositif **10.**

La visualisation de planéité va donc pour l'essentiel consister à visualiser, et pourra permettre de quantifier, un écart de position, selon la direction de l'axe central théorique **A1**, entre un point donné de la surface de bague réelle et un point correspondant de la surface théorique de bague. Ces deux points sont correspondants en ce que, dans un système de coordonnées cylindriques, centré sur l'axe central théorique, les points correspondants ont la même coordonnée angulaire, et appartiennent, pour l'un à la surface de bague réelle, et pour l'autre à la surface de bague théorique. Autrement dit, en négligeant les différences de position radiale, ils sont agencés verticalement l'un au-dessus de l'autre selon la direction axiale de l'axe central théorique **A1**.

Pour que le récipient soit inspecté correctement, il conviendra de veiller à ce que le récipient soit présenté de manière adéquate devant le dispositif de visualisation **10**. Pour cela, le dispositif **10** selon invention comporte une zone d'installation dans laquelle le récipient devra être installé. Cette zone d'installation peut être définie par un axe d'installation **A'1** et un plan d'installation (non représenté) défini comme étant un plan perpendiculaire à l'axe d'installation **A'1** situé au niveau du point le plus bas du dispositif. Ainsi, pour être inspecté correctement, un récipient devra être présenté de telle sorte que son axe central théorique **A1** corresponde au mieux à l'axe d'installation **A'1**, et que sa bague soit présentée avec son extrémité supérieure ouverte tournée en direction du dispositif **10**, mais en dessous du plan d'installation. Dans un cas idéal, les deux axes **A1** et **A'1** sont confondus. On comprend que l'intégralité du dispositif de visualisation **10** selon l'invention peut être positionnée au-dessus du plan d'installation tandis que le récipient sera amené en dessous du plan d'installation, sans risque de contact avec le dispositif. Le récipient **14** pourra donc être amené par n'importe quel mouvement de translation selon une direction perpendiculaire à l'axe d'installation **A'1**, sans risquer d'interférer avec le dispositif **10**.

Le dispositif et le procédé selon l'invention font appel à un capteur photoélectrique bidimensionnel **18** destiné à acquérir une image bidimensionnelle de la surface de bague réelle du récipient. Ce capteur, aussi qualifié de matriciel, peut être incorporé dans une caméra **19** et il peut être par exemple du type CCD ou CMOS. Le capteur **18** est par exemple constitué d'une matrice bidimensionnelle d'éléments photoélectriques. Le capteur est généralement associé à un circuit électronique de traitement des signaux fournis par les éléments photoélectriques pour délivrer un signal analogique, numérique ou informatique représentatif de l'image reçue par le capteur. Ce signal représentatif de l'image reçue par le capteur peut ensuite être délivré à un dispositif de traitement d'images et/ou à un dispositif de visualisation et/ou à un dispositif de stockage d'images (non représentés). Le capteur **18** est généralement associé à un système objectif optique **20** qui peut comporter un ou plusieurs éléments optiques, notamment une ou plusieurs lentilles minces, et éventuellement un diaphragme, associés pour permettre la formation d'une image sur le capteur.

Dans l'exemple des figures **1A** à **1C**, le système objectif optique **20** associé au capteur **18** est un système objectif télécentrique. Un système objectif télécentrique est bien connu de l'homme du métier des dispositifs de vision industrielle car il est utilisé pour former sur le capteur une image qui ne comporte pas ou quasiment pas d'effet de parallaxe. En théorie optique, un système objectif télécentrique est un système objectif dont la pupille d'entrée est positionnée à l'infini. Il s'ensuit qu'un tel objectif observe dans son champ de vision selon des rayons d'observations parallèles ou quasi-parallèles, d'où l'absence d'effet de parallaxe. L'axe optique du système objectif **20** est de préférence confondu avec l'axe d'installation **A'1**. On pourrait toutefois imaginer que cet axe optique ne soit pas rectiligne, mais segmenté, par exemple par intégration d'un miroir de renvoi dans le système objectif. On pourrait ainsi prévoir un miroir de renvoi à 45° par rapport à l'axe d'installation, avec ainsi un premier segment de l'axe optique, côté capteur, qui serait agencé à 90° par rapport à l'axe d'installation, et un second segment, de l'autre côté du miroir de renvoi, qui serait agencé en concordance avec l'axe d'installation **A'1**.

Dans l'illustration des **Figures 1A** à **1C**, le système optique est agencé verticalement selon l'axe **A'1**, et il est tourné vers le bas pour observer la zone d'installation en dessous du dispositif, et pour ainsi observer un éventuel récipient **14** agencé dans la zone d'installation. Le capteur photoélectrique **18** est donc au sommet du dispositif de visualisation et il est tourné vers le bas en direction de la zone installation. Avec cette disposition, on comprend que la surface théorique de bague d'un récipient **14** placé dans la zone installation est donc contenue dans un plan parallèle au plan du capteur. Ainsi, avec un simple objectif télécentrique, sans autre système optique, l'image de la surface de bague qui serait formée sur le capteur ne permettrait pas de « voir » un défaut de planéité. Au contraire, aucune variation de hauteur de cette surface de bague ne serait visible

Aussi, selon l'invention, un système optique **24** est interposé entre la zone d'installation du récipient et le capteur pour former sur le capteur une image de la surface de bague d'un tel récipient placé dans la zone d'installation. Ce système optique comprend, en plus du système objectif optique **20**, au moins un élément optique **22** qui est ici agencé entre le système objectif **20** et la zone d'installation. L'ensemble du système optique **24** entre le capteur **18** et la zone d'installation comprend ainsi le système d'objectif **20** et le ou les éléments optiques **22**.

De manière pratique, on définira l'axe d'installation **A'1** comme étant la prolongation dans la zone d'installation de l'axe optique du système optique **24**.

Dans l'exemple illustré, le capteur **18**, son système objectif **20**, l'élément optique **22** et la zone d'installation sont alignés dans cet ordre selon le même axe d'installation **A'1**.

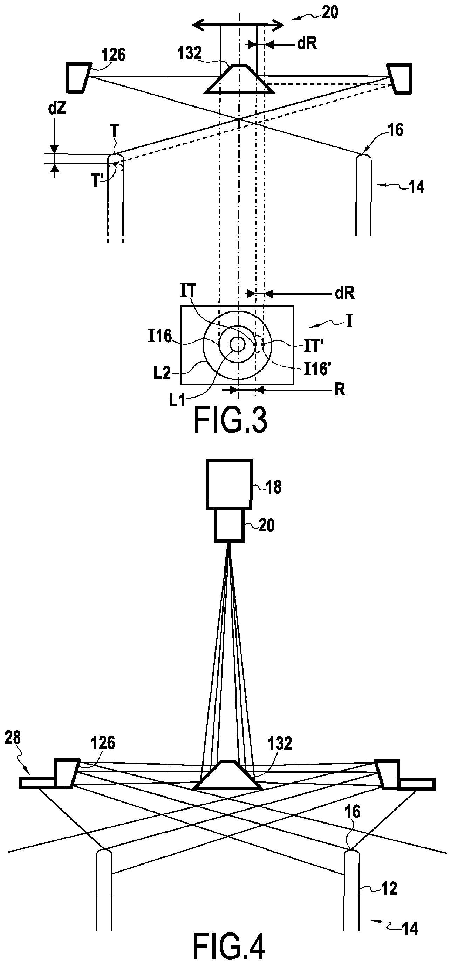

Selon un aspect de l'invention, le procédé comporte l'étape consistant à former, ici au travers du système optique **24,** une image plane de la surface de bague sur le capteur par le biais d'une transformation géométrique optique qui convertit la surface de bague réelle en une image de surface de bague. La même transformation convertit théoriquement la surface de bague théorique en une image théorique de la surface de bague, au sens que l'image théorique de surface de bague est l'image, qui serait formée par la transformation, d'une surface de bague réelle qui serait confondue avec la surface de bague théorique. Cette transformation géométrique optique, dont un exemple est illustré sur la **Figure 3,** convertit une différence de hauteur réelle **dZ,** selon la direction de l'axe central théorique, entre un point considéré **T'** de la surface de bague réelle et un point correspondant **T** de la surface de bague théorique, en un décalage radial image dR, sur l'image, du point image **IT'** de l'image de surface de bague du récipient par rapport au point image correspondant **IT** de l'image théorique de surface de bague. Le point correspondant **T** de la surface de bague théorique est le point de cette surface théorique qui aurait la même coordonnée angulaire que le point considéré **T'** dans un système de coordonnées cylindriques centré sur l'axe central théorique. Le point image **IT'** de l'image de surface de bague du récipient est l'image du point considéré **T'** de la surface de bague réelle au travers du système optique, du fait de la transformation géométrique optique. Le point image correspondant **IT** de l'image théorique de la surface de bague est l'image du point correspondant **T** de la surface de bague théorique au travers du système optique, du fait de la transformation géométrique optique.

De préférence, la transformation géométrique optique n'affecte pas le positionnement angulaire relatif de deux points de la surface de bague autour de l'axe, en ce sens que deux points de la surface de bague réelle, séparés par un écart angulaire autour de l'axe central théorique, voient, dans l'image obtenue par la transformation géométrique optique, leurs images respectives séparées du même écart angulaire autour de l'image de l'axe central théorique.

Dans l'exemple illustré sur les **Figures 1A** à **1C,** l'élément optique **22** qui assure l'essentiel de cette transformation optique comporte une surface primaire de réflexion **26,** la surface primaire **26** étant une surface de révolution axée sur l'axe d'installation **A'1** et agencée pour réfléchir des rayons lumineux, provenant de la surface de bague réelle, en direction du capteur. La surface primaire de réflexion **26** possède donc des propriétés spéculaires. Elle peut être avantageusement formée par un miroir, mais elle peut être aussi réalisée sous la forme d'un prisme, i.e. un dioptre optique.

L'axe d'installation **A'1** peut être défini comme étant l'axe de symétrie de révolution de la surface primaire de réflexion **26.**

Dans ce premier exemple, la réflexion des rayons lumineux provenant de la surface de bague réelle vers le capteur est une réflexion directe, sans autre surface de réflexion.

Dans l'exemple illustré sur les **Figures 1A** à **1C,** la surface primaire de réflexion **26** est une surface de révolution qui est tournée à l'opposé de l'axe d'installation **A'1,** et qui s'évase en direction de la zone d'installation. Plus précisément, la surface primaire de réflexion **26** comporte une surface tronconique convexe présentant un petit diamètre et un grand diamètre tous les deux inférieurs au diamètre de la surface de bague théorique. Son petit diamètre est agencé du côté du capteur selon l'axe d'installation tandis que son grand diamètre est agencé du côté de la zone installation.

Selon un aspect de l'invention, du fait de cette transformation géométrique optique, dans l'image plane recueillie par le capteur, le décalage radial image résultant d'une différence de hauteur réelle unitaire est supérieur au décalage radial image résultant d'un décalage radial réel de même dimension entre un point considéré de la surface de bague réelle et un point correspondant de la surface de bague théorique. En d'autres termes, l'influence d'une différence de hauteur réelle est supérieure à l'influence d'une différence radiale réelle dans le décalage radial image obtenu dans la transformation géométrique optique. Ainsi, un décalage de hauteur de 1 mm de la surface de bague réelle par rapport à la surface de bague théorique se traduirait par un premier décalage radial image, tandis qu'un décalage radial de 1 mm de la surface de bague réelle par rapport à la surface de bague théorique se traduirait par un second décalage radial image et, selon l'invention, le premier décalage radial image serait supérieur au second décalage radial image.

Dans le dispositif de l'invention, cette prépondérance est assurée par le fait que le système optique défini un champ d'observation périphérique qui observe la surface de bague par au-dessus, selon des rayons d'observation radiaux contenus dans un plan radial contenant l'axe d'installation et qui forment par rapport à un plan **PRef** perpendiculaire à l'axe d'installation **A'1** un angle d'élévation d'observation qui est dans tous les cas inférieurs à 45° et qui est de préférence inférieur à 25°.

De préférence, le champ d'observation périphérique est sans rupture azimutale autour de l'axe d'installation **A'1**. Notamment, il n'y a pas de discontinuité angulaire azimutale entre deux rayons radiaux d'observation infiniment proches angulairement autour de l'axe d'installation. De la sorte, il n'y a pas de rupture de point vue dans l'image, qui rendrait l'image difficile à interpréter.

Le champ d'observation périphérique est aussi de préférence continu en azimut au sens où aucun angle azimutal d'observation autour de l'axe d'installation n'est masqué. Toutefois, dans certains cas, notamment du fait de contraintes d'installation matérielle, il se peut toutefois qu'un ou plusieurs secteurs angulaires, autour de l'axe d'installation, soit masqués, tout en conservant une absence de rupture azimutale. De préférence, un tel secteur angulaire azimutal masqué sera d'étendue faible voire très faible, de préférence inférieure à 10 degrés, voire de préférence inférieur à 5 degrés autour de l'axe d'installation.

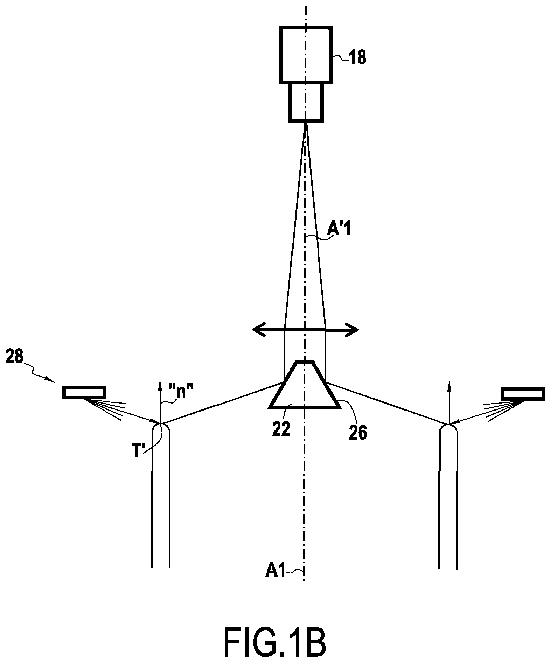

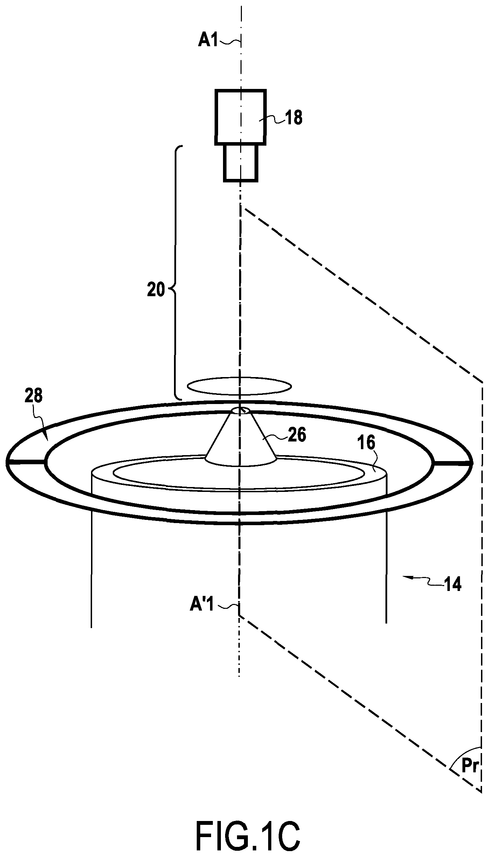

Un exemple de réalisation de ce champ d'observation périphérique est illustré à la **Figure 1A.** Ce champ d'observation s'étend à 360° autour de l'axe d'installation **A'1**. Ce champ observe « par au-dessus » au sens que la surface de bague est observée depuis au-dessus d'un plan **Pref** perpendiculaire à l'axe central théorique A1 de la surface de bague, et tangent en au moins un point à la surface de bague, de préférence le point le plus haut selon la direction de l'axe central théorique **A1**. L'angle d'élévation d'observation correspond à l'angle $\gamma$, par rapport à un plan perpendiculaire à l'axe d'installation A'1, d'un rayon d'observation issu de la surface de bague et susceptible d'être vu par le capteur au travers du système optique **24.** Dans le cadre d'un dispositif pourvu d'un système optique télécentrique, les rayons d'observation vus par le capteur entrent tous dans le système objectif de manière parallèle. Si de plus, comme dans le système de la **Figure 1,** la surface primaire de réflexion **26** est une surface tronconique générée par une droite, l'angle d'élévation d'observation $\gamma$ est alors un angle unique pour tout rayon d'observation, et il peut être directement déduit de l'inclinaison de la surface primaire de réflexion **26** par rapport à l'axe d'installation **A'1.**

Cependant, comme il sera vu dans le cas d'un dispositif n'ayant pas un système d'objectif télécentrique, ou dans le cas où l'élément optique **22** ne serait pas strictement un cône généré par une droite, les rayons d'observation vus par le capteur pourraient avoir des angles d'élévation d'observation différents les uns par rapport aux autres. Dans ce cas, on peut prendre comme convention que l'angle d'élévation d'observation est l'angle le plus grand, par rapport à un plan perpendiculaire à l'axe d'installation **A'1,** d'un rayon d'observation issu de la surface de bague **16** et susceptible d'être vu par le capteur **18** au travers du système optique **24.**

Dans l'exemple de réalisation du dispositif selon l'invention illustrée à la **Figure 1A,** comportant une surface primaire de réflexion **26** tronconique, convexe dans un plan perpendiculaire à l'axe d'installation, cette propriété, selon laquelle l'influence d'une différence de hauteur réelle est supérieure à l'influence d'une différence radiale réelle dans le décalage radial image obtenu dans la transformation géométrique optique, est assurée notamment par l'angle de la surface primaire de réflexion **26** par rapport à l'axe d'installation **A1.** Plus précisément, le demi-angle au sommet $\alpha$ caractéristique de la surface primaire de réflexion convexe **26** détermine le rapport d'influence, sur le décalage radial image, entre une différence de hauteur et une différence radiale de la surface réelle par rapport à la surface de bague théorique. Le plus ce demi-angle au sommet $\alpha$ se rapproche de 45°, le plus l'influence de la différence de hauteur sur le décalage radial image sera importante. Bien entendu, on veillera cependant à ce que ce demi-angle au sommet reste inférieur à 45°, de telle sorte que l'élément optique **22** qui porte la surface primaire de réflexion **26** puisse être agencé au-dessus de la surface de bague **16,** le capteur **18** voyant ainsi la surface de bague **16** par le dessus au travers du système optique **24.** Dans tous les cas, ce demi-angle au sommet $\alpha$ est supérieur à 22,5° pour que l'influence de la différence de hauteur réelle soit supérieure à l'influence d'un décalage radial réel dans le décalage radial image.

La surface primaire de réflexion pourrait être non plus tronconique mais une surface de révolution à double courbure, évasée, générée par la révolution, autour de l'axe d'installation **A'1,** d'un tronçon de courbe non droite, par exemple un tronçon de parabole, d'hyperbole ou d'ellipse. Dans un plan radial, cette surface présentera par exemple un profil concave ou convexe, tout en conservant son profil convexe dans un plan perpendiculaire à l'axe d'installation **A'1.** Une telle surface à double courbure peut être utilisée notamment pour rendre le système **24,** dans sa globalité, télécentrique vis-à-vis du capteur, si le système objectif **20** en soi ne l'est pas.

De préférence, dans le procédé selon l'invention, le décalage radial image correspondant à une différence de hauteur réelle unitaire est au moins 2,14 fois supérieur, et plus préférentiellement au moins 3 fois supérieur au décalage radial image correspondant à un décalage radial réel de même dimension entre ledit point de la surface de bague réelle et un point correspondant de la surface de bague théorique. De la sorte, on assure que, dans l'image obtenue, un décalage radial est très majoritairement dû à un décalage en hauteur de la surface de bague réelle par rapport à la surface de bague théorique plutôt qu'à un décalage radial entre ces deux surfaces.

Dans le dispositif de la **Figure 1A,** ce rapport de 3 dans la transformation géométrique optique correspond à un demi-angle au sommet de la surface primaire de réflexion supérieur à 35,785°. Cette valeur permet d'obtenir un angle d'élévation d'observation inférieur à 18,43°. Dans l'exemple de réalisation illustrée à la **Figure 1A,** l'angle d'élévation d'observation est de 15°, et le demi-angle au sommet $\alpha$ de la surface primaire de réflexion **26** est de 37,5°. De manière plus générale, la surface primaire de réflexion convexe **26** peut être une surface de révolution tronconique, continue à 360° autour de l'axe d'installation **A'1,** et présentant un demi-angle au sommet $\alpha$ égal à 45° moins la moitié de l'angle d'élévation d'observation.

La surface de réflexion **26** est de préférence sans discontinuité de courbure autour de l'axe d'installation **A'1,** la courbure étant analysée dans un plan perpendiculaire à l'axe d'installation **A'1,** pour assurer un champ d'observation sans rupture azimutale.

La surface de réflexion **26** est aussi de préférence continue en azimut au sens qu'elle est continuellement réfléchissante autour de l'axe d'installation **A'1,** sans secteur angulaire masqué, pour assurer la continuité azimutale du champ d'observation.

Selon un autre aspect de l'invention, le procédé de visualisation prévoit que la surface de bague réelle **16** du récipient soit éclairée à l'aide d'un faisceau lumineux incident périphérique, c'est-à-dire s'étendant à 360° autour de l'axe d'installation **A'1.** La surface de bague est éclairée par en-dessous, au sens que des rayons lumineux incidents arrivent sur la surface de bague **16** en provenance de points situés au-dessus du plan **PRef** perpendiculaire à l'axe central théorique **A1** et tangent à un point de la surface de bague, de préférence le point le plus haut selon la direction de l'axe central théorique **A1**. Ce faisceau lumineux incident périphérique comprend des rayons lumineux radiaux incidents contenus dans un plan radial contenant l'axe d'installation, lesdits rayons radiaux incidents étant dirigés vers l'axe, tels qu'illustré sur la **Figure 1B.** Les rayons radiaux incidents pourraient être des rayons parallèles, mais cela n'est pas obligatoire et, dans le procédé illustré par la **Figure 1B,** le faisceau lumineux incident périphérique comprend, dans un demi-plan radial **Pr** donné (illustré sur la **Figure 1C),** contenant l'axe d'installation et délimité par l'axe d'installation, des rayons radiaux non parallèles. Les rayons radiaux sont, pour certains d'entre eux dirigés vers l'axe d'installation, sans être nécessairement perpendiculaire à cet axe. Au contraire, il est illustré sur la **Figure 1B** que le faisceau lumineux incident périphérique peut contenir des rayons radiaux qui forment un angle d'élévation, avec un plan perpendiculaire à l'axe d'installation, compris de préférence entre 0 et 45 degrés. De préférence, le faisceau lumineux contient des rayons radiaux selon un éventail angulaire continu ou sensiblement continu. Cet éventail peut avoir une étendue angulaire d'au moins 30 degrés, voire plus. Les rayons contenus dans cet éventail peuvent former un angle d'élévation, avec un plan perpendiculaire à l'axe central théorique, compris entre 5 et 40 degrés.

Dans un dispositif selon l'invention, le dispositif comporte ainsi un système d'éclairage apte à fournir un tel faisceau lumineux incident périphérique comprenant des rayons radiaux contenus dans un plan radial contenant l'axe d'installation **A'1.** De préférence, ce système d'éclairage comprend une source lumineuse annulaire **28** axée sur l'axe d'installation **A'1.** De préférence, elle présente un diamètre supérieur au diamètre de la surface de bague réelle des récipients que l'on souhaite contrôler à l'aide du dispositif. Cette source lumineuse annulaire **28** est agencée au-dessus de la zone d'installation, donc au-dessus de la surface de bague réelle. Dans un demi-plan radial **Pr** contenant l'axe d'installation **A'1** et délimité par cet axe d'installation, la source lumineuse annulaire **28** correspond à une source qui peut être ponctuelle, ou qui au contraire peut avoir une certaine étendue dans ce demi-plan **Pr** comme illustré sur les figures. Cette source lumineuse éclaire en direction de la zone d'installation, donc en direction de l'axe d'installation, mais en formant avec celui-ci un angle de manière à éclairer vers le bas. Si cette source n'est pas une source émettant des rayons parallèles, elle émet de préférence, dans ce demi-plan radial, un cône lumineux contenant des rayons radiaux selon un éventail continu ou sensiblement continu, comme illustré sur la **Figure 1B.** Cet éventail peut par exemple former un secteur angulaire s'étendant entre 5 et 40 degrés par rapport à un plan perpendiculaire à l'axe central théorique. L'étendue angulaire de l'éventail peut être limitée par un ou plusieurs caches. Toutefois, la source lumineuse peut émettre selon un éventail beaucoup plus grand.

Dans la mesure où la source lumineuse **28** est périphérique, on peut l'assimiler à une multitude de sources, éventuellement ponctuelles ou quasi ponctuelles, agencées autour de l'axe d'installation **A'1** et émettant chacune un éventail de lumière telle que défini ci-dessus. De préférence, la source lumineuse est continue sur toute la périphérie à 360° autour de l'axe d'installation, au sens que, dans chaque demi-plan radial, elle émet le même éventail lumineux. Cependant, dans la réalité, la source lumineuse n'est pas parfaitement continue. Il se peut ainsi qu'elle soit interrompue sur un secteur angulaire, de préférence limité, autour de l'axe **A'1.** Il se peut par ailleurs que la source lumineuse ne soit pas continue, au sens qu'elle serait formée par une série de sources individuelles juxtaposées, discrètes, par exemple formée par une série de diodes électroluminescentes.

De préférence, le faisceau incident éclaire la surface de bague **16,** depuis le haut, sous une incidence telle que, au point de réflexion **T'** d'un rayon incident, dont le rayon réfléchi par la surface de bague réelle est vu par le capteur, la normale « n » à la surface de bague forme par rapport à l'axe **A'1** un angle inférieur à 30°, de préférence inférieur à 10°. Dans le cadre d'une géométrie parfaite, avec une surface de bague réelle correspondant à la surface de bague théorique, on s'assure ainsi que la lumière réfléchie par la surface de bague qui est vue par le capteur **18** est la lumière qui est réfléchie par le point localement le plus haut, ou proche du plus haut local de la surface de bague. On considère ici uniquement ce qui se passe dans un demi-plan radial **Pr** du dispositif et de la surface de bague à contrôler. Ainsi, le point localement le plus haut de la surface de bague est le point qui, dans le profil de la surface de bague dans ce demi-plan radial **Pr,** est le plus haut selon la direction de l'axe installation. Par ailleurs, le point localement le plus haut est défini comme étant celui pour lequel la normale à la surface de bague est parallèle à l'axe installation. La **Figure 1B** illustre un rayon incident émis par la source lumineuse, qui est réfléchi par un point **T'** de la surface de bague en un rayon réfléchi qui est intercepté par la surface primaire de réflexion **26** et ainsi envoyé vers le capteur par le système optique. Pour l'illustration, la normale « n » à la surface de bague **16,** au point **T',** est sensiblement parallèle à la direction de l'axe d'installation, et le point **T'** est le point localement le plus haut du profil de surface de bague dans le demi-plan radial correspondant.

Dans le cadre du dispositif, cette condition sera remplie en sélectionnant la position adéquate de la source lumineuse **28.** Cette position, qui peut par exemple être définie par le diamètre de la source annulaire **28** et par sa position en hauteur selon la direction de l'axe installation **A'1,** définit en effet l'angle d'incidence des rayons qui sont susceptibles d'éclairer la surface de bague. Bien entendu, le diamètre et la position en hauteur de la surface de bague réelle **16** déterminent, en combinaison avec l'orientation de la normale au point de réflexion sur la surface de bague, lequel ou lesquels des rayons émis par la source **28** sont susceptibles d'être réfléchis en direction du capteur. On comprend donc que pour chaque diamètre de surface de bague, il faudrait adapter soit le diamètre de la source annulaire soit sa position en hauteur par rapport à la surface de bague **16.** Cependant, il n'est pas nécessairement critique de détecter le point localement le plus haut de la surface de bague. En effet, dans le cadre d'une surface de bague plane et annulaire, les bords radiaux interne et externe de la surface de bague présentent nécessairement un léger arrondi qui fait que, même si le point de réflexion de la lumière incidente est situé sur cet arrondi, la différence de hauteur entre le point de réflexion et le point localement le plus haut sera généralement considéré comme négligeable. Dans le cadre d'une surface de bague dont le profil dans le demi plan radial est arrondi, on considérera aussi que le fait que la réflexion se fait sur un point qui n'est pas le point localement le plus haut est largement compensé par le fait que cette situation se répète sur toute la périphérie à 360° de sorte que, d'un point de vue de l'analyse de la planéité, l'erreur ainsi commise est généralement considérée comme négligeable. Ainsi, bien qu'il soit possible de prévoir un dispositif dans lequel la source lumineuse serait réglable, par réglage de sa position radiale ou de sa position selon la direction de l'axe installation, pour régler l'angle d'incidence du faisceau lumineux sur la surface de bague, une telle disposition n'est pas nécessaire. On peut ainsi prévoir de réaliser un dispositif dans lequel il existe une seule source lumineuse annulaire ayant un diamètre défini et une position fixe selon la direction de l'axe d'installation. Dans ce cas, le diamètre de la source lumineuse annulaire **28** et sa position sur la direction de l'axe seront avantageusement choisis pour répondre à la condition ci-dessus, soit pour un diamètre moyen de surface de bague des récipients à contrôler, soit pour correspondre à un diamètre privilégié de surface de bague correspondant à des récipients les plus fréquemment contrôlés par le dispositif. En variante, pour couvrir au mieux une large gamme de diamètre de surface de bague, on peut prévoir que le dispositif soit muni de plusieurs sources lumineuses annulaires, par exemple décalées selon la direction de l'axe installation et/ou de diamètre différent, ces différentes sources lumineuses pouvant être utilisées simultanément, ou alternativement en fonction du diamètre de la surface de bague d'un récipient à inspecter.

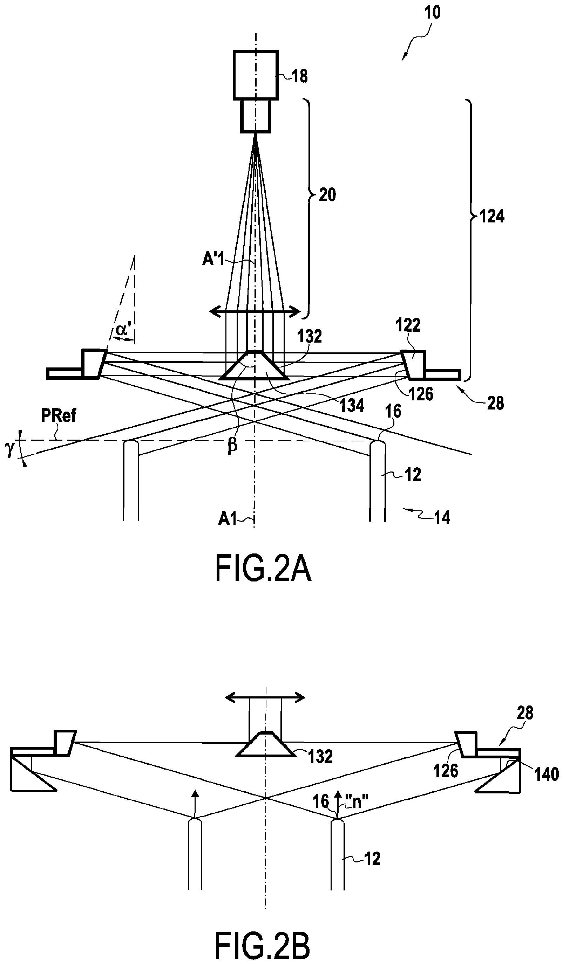

On a illustré sur les **Figures 2A** et **2B** un deuxième mode de réalisation d'un dispositif selon l'invention qui comporte une surface primaire de réflexion **126** et une surface de réflexion de renvoi **132,** permettant de mettre en œuvre un second procédé selon l'invention.

Le système d'acquisition d'images, y compris le capteur **18,** son système objectif **20** et les éventuels dispositifs de traitement d'images, de visualisation et ou de stockage sont identiques à ceux décrits en référence au mode de réalisation de la **Figure 1** et ne seront donc pas décrits plus avant dans le cadre de ce second mode de réalisation. De même, les mêmes systèmes d'éclairage peuvent être utilisés dans les deux modes de réalisation, et le système d'éclairage ne sera pas décrit en détail, sauf pour ce que concerne la variante illustrée à la **Figure 2B.**

Dans ce second mode de réalisation, le système optique **124,** qui est agencé entre le capteur **18** et la zone d'installation, présente une surface primaire de réflexion **126** qui comporte une surface de révolution tournée vers l'axe d'installation. Cette surface de révolution est évasée dans la direction de l'axe d'installation et elle présente un petit diamètre et un grand diamètre tous les deux supérieurs au diamètre de la surface de bague théorique. De cette manière, la surface primaire de réflexion **126** peut renvoyer, en direction de l'axe d'installation **A'1,** des rayons lumineux provenant de la surface de bague réelle selon l'angle d'élévation d'observation **Y.**

Dans ce second mode de réalisation, le dispositif comporte, entre la surface primaire de réflexion **126** et le capteur **18,** au moins une seconde surface de réflexion. Comme on peut le voir sur la **Figure 2A,** les rayons réfléchis par la surface primaire de réflexion **126** sont interceptés par une surface de réflexion de renvoi **132.** La surface de réflexion de renvoi **132** est agencée dans le champ de vision du capteur, ce champ de vision étant défini par le système d'objectif optique **20.** Dans l'exemple, cette surface de réflexion de renvoi **132** comporte une surface de révolution tournée à l'opposé de l'axe d'installation **A'1,** de manière à renvoyer les rayons en direction du capteur.

Dans ce mode de réalisation, contrairement au premier mode de réalisation, la surface primaire **126,** tout en étant une surface de révolution axée sur l'axe d'installation **A'1,** est agencée pour réfléchir indirectement des rayons lumineux, provenant de la surface de bague réelle sous l'angle d'élévation d'observation γ, en direction du capteur **18.** En effet, la réflexion sur la surface primaire **126** est indirecte car suivie par au moins une réflexion, ici sur la surface de réflexion de renvoi **132,** avant d'aboutir au capteur **18.**

Dans le mode de réalisation illustré, la surface primaire de réflexion **126** est une portion de surface tronconique, concave dans un plan perpendiculaire à l'axe d'installation **A'1.** Elle est par exemple formée sur la face interne d'une couronne annulaire **122.**

Comme pour le premier mode de réalisation, la surface primaire de réflexion **126** pourrait être non plus tronconique mais une surface de révolution à double courbure, évasée, tout en restant concave dans un plan perpendiculaire à l'axe d'installation **A'1**.

Dans le mode de réalisation illustré, la surface de réflexion de renvoi **132** est une surface tronconique convexe qui est axée sur l'axe d'installation **A'1**. La surface de réflexion de renvoi **132** est formée sur la surface externe d'un tronc de cône **134**. Dans l'exemple illustré, elle présente un petit diamètre et un grand diamètre qui sont tous les deux inférieurs au diamètre de la surface de bague d'un récipient à contrôler, mais cette caractéristique n'est pas obligatoire. Le grand diamètre est agencé en-dessous du petit diamètre. La surface de réflexion de renvoi **132** s'inscrit dans le champ de vision du capteur **18** défini par le système objectif **20**.

Dans un mode de réalisation avantageux, la trajectoire des rayons entre la surface primaire de réflexion **126** et la surface de réflexion de renvoi **132** est perpendiculaire ou sensiblement perpendiculaire à l'axe d'installation. Une telle disposition permet de réduire considérablement la sensibilité du dispositif à un éventuel défaut de centrage de la surface primaire de réflexion **126** ou de la surface de réflexion de renvoi **132**. Pour cela, la surface de réflexion de renvoi tronconique **132** présente un demi-angle au sommet de 45° et elle est agencée à la même hauteur selon la direction de l'axe d'installation **A'1** que la surface primaire de réflexion **126**. La surface primaire de réflexion **126** présente dans ce cas un demi-angle au sommet α**'** qui est égal à la moitié de l'angle d'élévation d'observation γ souhaité. Ainsi, pour un angle d'élévation d'observation γ souhaité de 15°, la surface primaire de réflexion **126** présente une conicité dont le demi-angle au sommet α**'** vaut 7,5°, la surface primaire de réflexion tronconique **126** étant évasée vers le bas, avec son grand diamètre agencé en-dessous de son petit diamètre selon la direction de l'axe d'installation.

Cependant, on pourrait aussi réaliser une variante de ce deuxième mode de réalisation dans lequel la surface de réflexion de renvoi **132** serait une surface tronconique présentant un demi-angle au sommet β inférieur à 45°, par exemple égal à 45° moins un angle δ (delta). Dans ce cas, la surface de réflexion de renvoi **132** serait disposée au-dessus du niveau de la surface primaire de réflexion **126,** et la surface primaire de réflexion **126** présenterait un demi-angle au sommet **a'** égal à la moitié de l'angle d'élévation d'observation γ souhaité moins la valeur de l'angle δ (Δ). Si la valeur ainsi obtenue est négative, cela signifie que, contrairement aux modes de réalisation préférée, la surface primaire de réflexion **126** s'évase vers le haut, son plus grand diamètre étant agencé au-dessus de son plus petit diamètre.

Dans les deux exemples de dispositifs décrits ci-dessus, on assure que la surface de bague est observée par le capteur **18**, au travers du système optique **24** ou **124,** selon un angle d'élévation d'observation **Y** rasant, c'est-à-dire formant un angle faible par rapport à un plan perpendiculaire à l'axe d'installation, de préférence inférieur à 25° ou moins. Par ailleurs, dans les deux modes de réalisation, on voit que la surface de bague **16** est observée « depuis l'intérieur » c'est-à-dire que les rayons d'observation, dans leur trajectoire entre la surface de bague et le capteur, sont dirigés en direction de l'axe d'installation lorsqu'ils quittent la surface de bague **16** en direction de la surface primaire de réflexion **26, 126**. En revanche, les deux modes de réalisation diffèrent en ce sens que, dans le premier mode de réalisation, la surface primaire de réflexion **26** est agencée radialement à l'intérieur par rapport au diamètre de la surface de bague, tandis que, dans le deuxième mode de réalisation, la surface primaire de réflexion **126** est agencée radialement à l'extérieur par rapport au diamètre de la surface de bague **16**. Dans le premier mode de réalisation, un rayon d'observation provenant de la surface de bague **16** est intercepté par la surface primaire de réflexion **26** dans le même demi-plan radial **PRef,** selon un trajet court. Dans le deuxième mode de réalisation, un rayon d'observation provenant de la surface de bague **16** est intercepté par la surface primaire de réflexion **126** en un point diamétralement à l'opposé du point d'origine sur la surface de bague, selon un trajet long qui coupe l'axe d'installation **A'1**. Pour un même angle d'élévation d'observation γ, on comprend que la distance nécessaire, selon la direction de l'axe installation, entre la surface primaire de réflexion **26** ou **126** et la surface de bague **16** est plus grande dans le cas du deuxième mode de réalisation que dans le cas du premier mode de réalisation.

Dans le deuxième mode de réalisation, la source lumineuse **28** est aussi une source lumineuse annulaire **28** présentant un diamètre supérieur au diamètre de la surface de bague. Dans l'exemple illustré, le diamètre de la source lumineuse annulaire **28** est supérieur au diamètre de la couronne **122** annulaire qui porte la surface primaire de réflexion **126**. Dans ce mode de réalisation, la source lumineuse **28** est agencée sensiblement à la même hauteur selon la direction de l'axe installation que la surface primaire de réflexion **126**. Cependant, cette position est purement illustrative et pourrait être adaptée en fonction du diamètre et de la position axiale de la surface de bague du récipient à inspecter.

Ce deuxième mode de réalisation de l'invention présente l'avantage de permettre de disposer le système optique **124** à une plus grande distance de la surface de bague selon la direction de l'axe d'installation.

On remarquera que la **Figure 2B** illustre une variante du mode de réalisation de la **Figure 2A** qui ne diffère que par le fait que le système d'éclairage comporte, en plus de la source lumineuse annulaire **28,** un réflecteur **140** agencé juste en dessous de la source lumineuse annulaire **28**. Ce réflecteur **140** comporte ici une surface tronconique, tournée en direction de l'axe d'installation. La surface du réflecteur **140** est évasée vers le haut et présente donc un diamètre sensiblement identique à celui de la source lumineuse **28**. Elle réfléchit des rayons sensiblement verticaux, émis par la source lumineuse **28**, en direction de la zone d'installation selon une incidence rasante, en direction de la surface de bague. Un tel réflecteur permet de concentrer la lumière émise par la source lumineuse **28** en direction de la surface de bague, sous une incidence rasante favorable à l'invention.

Sur la **Figure 3,** on a illustré schématiquement la transformation géométrique optique opérée par le système optique, ici illustrée dans le cadre du deuxième mode de réalisation. On a illustré ainsi un écart entre un point **T'** de la surface de bague réelle **16** et un point correspondant **T** de la surface de bague théorique. Dans l'exemple, cet écart est un écart purement vertical dZ, s'étendant donc uniquement selon la direction de l'axe d'installation. On a illustré en trait continu la trajectoire (théorique) d'un rayon d'observation issu du point **T** de la surface de bague théorique en direction du capteur photoélectrique, et en trait discontinu la trajectoire d'un rayon d'observation issu du point **T'** de la surface de bague réelle. Dans le bas de la **Figure 3,** on a illustré la projection de l'image I telle que vue par le capteur au travers du système optique, cette image comportant une ligne **I16** illustrant l'image théorique de surface de bague. L'image de surface de bague réelle est ici illustrée sous la forme d'une ligne **I16'** qui est l'image, formée par le système optique **24** ou **124** sur le capteur **18,** de la réflexion du faisceau incident sur la surface de bague **16.** L'épaisseur de cette ligne selon la direction radiale dans l'image est déterminée notamment par la géométrie, par exemple plane, arrondie, en V inversé ou polygonale, du profil de la surface de bague en section dans un plan radial, par l'étendue de la source lumineuse dans un même plan radial, et par l'angle d'éventail lumineux délivré par cette source. Les lignes **L1** et **L2** illustrent les limites du champ d'observation imposées par le système optique, notamment par la dimension de la surface de réflexion primaire **126** selon la direction de l'axe d'installation. L'image de surface de bague réelle **I16',** illustrée en trait discontinu, est sensiblement confondue sur toute la périphérie avec l'image théorique de bague **I16,** illustrée en trait continu. On voit que, dans le secteur angulaire correspondant au point **T'** de la surface de bague présentant un défaut localisé, l'image de surface de bague réelle **I16'** se démarque de l'image théorique de bague **I16,** et présente, dans l'image, un décalage radial image dR. On voit que la différence de hauteur **dZ** selon la direction de l'axe d'installation est convertie selon une transformation géométrique optique, due au système optique **124,** en un décalage radial image dR sur l'image vue par le capteur.

Dans l'exemple de réalisation illustré, cette conversion peut être décrite par la relation :

$$dR = dZ * G * \cos(\gamma)$$

avec G = grandissement du système objectif **20.**

Si on traçait un schéma équivalent pour illustrer l'influence d'un écart radial entre la surface de bague réelle et la surface de bague théorique, on s'apercevrait que l'influence de cet écart sur le décalage image dR serait très faible, proportionnelle au sinus de l'angle d'élévation d'observation **Y.** Or, en utilisant un angle d'élévation d'observation inférieur à 25°, voire inférieur à 18,43°, on minimise considérablement l'influence d'un tel écart radial.

On peut voir que la transformation optique géométrique proposée dans le procédé selon l'invention, et mise en œuvre par le système optique selon l'invention, forme, sur le capteur, une image optique complète et continue de la surface de bague réelle. Cette image optique complète et continue est formée sur le capteur sans transformation numérique, uniquement par un procédé optique agissant sur la lumière. Dans l'exemple illustré, cette image optique complète et continue est formée sur le capteur par le système optique 24 sans transformation numérique.

On notera que, de préférence, la mise au point du système optique **24,** notamment par le système objectif **20,** est faite sur la surface de bague **16** (aux aberrations de fort astigmatisme près), pour conjuguer la surface de bague **16** avec la surface du capteur. Les rayons lumineux issus de la source **18** et qui se réfléchissent sur la surface de bague **16** permettent de former l'image de la surface de bague. Ils fournissent la lumière nécessaire.

En d'autres termes, l'image de la surface de bague **I16'** est de préférence constituée des rayons radiaux du faisceau lumineux incident qui sont réfléchis par réflexion spéculaire sur la surface de bague **16** et dirigés par le système optique **24,** incorporant notamment la surface primaire de réflexion **26, 126,** sur le capteur **18.** Dans certains modes de réalisation, on considérera que l'image **I16'** de la surface de bague réelle est constituée uniquement des rayons radiaux du faisceau lumineux incident qui sont réfléchis par réflexion spéculaire sur la surface de bague 16 et dirigés par le système optique **24,** incorporant notamment la surface primaire de réflexion **26, 126,** sur le capteur **18.**

L'image obtenue par un dispositif ou un procédé selon l'invention peut être exploitée sous la forme d'une image visualisée. Ainsi, un opérateur peut être affecté au contrôle visuel de telles images pour détecter les défauts éventuels de surface de bague et pour en déterminer le type. En effet, en fonction de la géométrie de l'image de surface de bague réelle **I16'** il sera possible pour un opérateur de distinguer des défauts très localisés par rapport à des défauts plus étendus.

Dans la plupart des cas, l'image de la surface de bague **I16'** pourra être assimilée à une ligne, où il sera possible de définir une ligne **I16'** représentative de l'image de la surface de bague, par exemple un choisissant une ligne de bord intérieur ou extérieur ou une ligne médiane de l'image de la surface de bague en tant que ligne représentative.

Une ligne théorique **I16** représentative de l'image théorique de surface de bague peut être une ligne prédéfinie, par exemple un cercle centré sur l'image de l'axe d'installation **IA'1**. La ligne théorique **I16** représentative de l'image théorique de surface de bague peut être déduite de l'image de la surface de bague **I16'**, par exemple par calcul au sein d'un dispositif de traitement d'images, en appliquant à cette image une transformation numérique visant à estimer, en fonction de l'image de la surface de bague **I16'**, la ligne théorique correspondante.

À partir de l'image ainsi obtenue, le procédé selon l'invention peut comporter une étape de détermination comportant la détermination d'un écart radial image entre la ligne **I16'** représentative de l'image de la surface de bague et la ligne théorique **I16** représentative de l'image théorique de surface de bague. Pour ce faire, on pourra utiliser, comme ligne représentative de l'image de la surface de bague, l'image formée par le système optique **24** ou **124** sur le capteur, de la réflexion du faisceau incident sur la surface de bague. Cette détermination peut être effectuée, dans un dispositif selon l'invention, par un dispositif de traitement d'images associé au capteur **18**, incluant notamment par exemple un ordinateur.

On a illustré sur la **Figure 4** un troisième mode de réalisation de l'invention qui ne diffère du premier mode de réalisation qu'en ce que le système objectif optique **20** associé au capteur **18** n'est pas un objectif télécentrique mais par exemple un objectif classique, équivalent à celui que l'on trouve dans un appareil photographique ou une caméra conventionnelle, dans lequel la pupille d'entrée de l'objectif est positionnée dans l'objectif. Dans ce cas, on voit que les rayons d'observation ne sont plus, dans la zone d'installation, parallèles entre eux dans un demi-plan radial **Pr**, mais présentent au contraire une divergence. Ainsi, pour un même décalage en hauteur dZ réel, le décalage dR observé varie avec la distance de la bague à l'axe **A'1**. Il en résulte qu'un décalage radial de l'axe **A1** de la bague par rapport à l'axe **A'1** de l'installation se traduit par une modification complexe de la forme de l'image de bague réelle (courbe non circulaire).

Que le système optique **24, 124** soit ou non télécentrique, le décalage radial de la surface de bague réelle par rapport à l'axe de l'installation se traduit par des déformations géométriques de l'image de la bague réelle. La télécentricité réduit et simplifie ces déformations.

Par rapport à l'image théorique de surface de bague, l'image de la surface de bague réelle peut ainsi combiner plusieurs déformations, notamment :

a) des déformations liées au décentrement de la surface de bague réelle par rapport à la surface de bague théorique,
b) des déformations liées à l'ovalisation de la surface de bague réelle,
c) des défauts liés à un inclinaison de la surface de bague réelle, et
d) des déformations liés aux défauts de planéité. Il doit être compris qu'en raison de l'observation rasante ($\gamma$ faible) les déformations liées aux défauts de planéité sont maximales et les autres peuvent être négligées. Toutefois dans le but d'une précision accrue, le système de traitement peut identifier et/ou qualifier et/ou quantifier les différentes déformations.

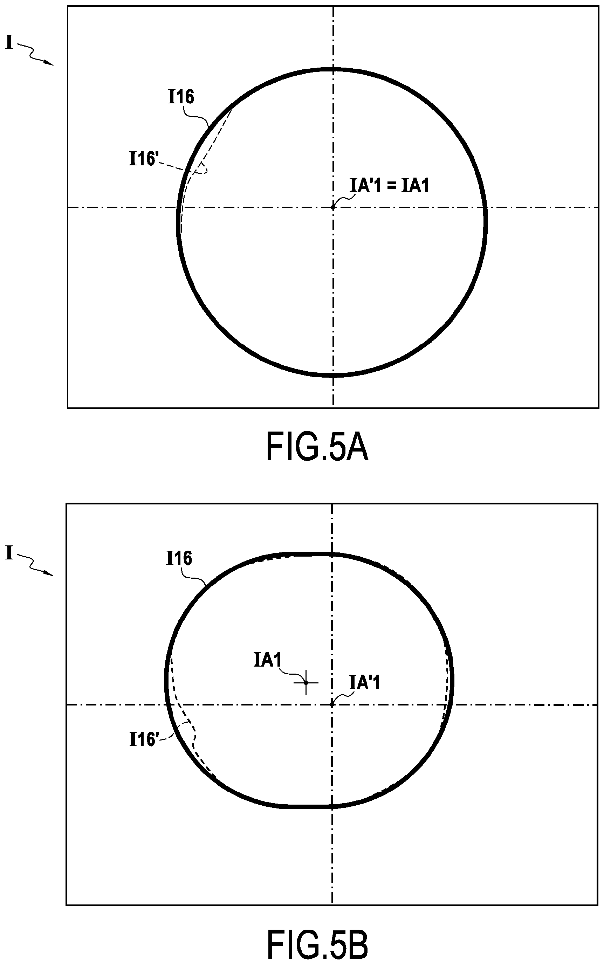

Les **Figures 5A** et **5B** illustrent des images qui peuvent être obtenues grâce à un dispositif ou un procédé selon l'invention. De telles images peuvent être obtenues directement sur le capteur **18**, directement par simple transformation géométrique optique au travers du système optique **24**, et comportent une image de surface de bague réelle **I16** continue sur toute sa périphérie autour de l'image de l'axe central théorique **IA1**.

La **Figure 5A** illustre, en traits pointillés, l'image **I16'** d'une surface de bague réelle dont l'axe central théorique **A1** est confondu avec l'axe d'installation **A'1**. Dans ce cas l'image théorique de bague **I16**, illustrée en trait pleins, est une image parfaitement circulaire, et il est alors aisé d'identifier un défaut de planéité en observant le décalage radial image entre les courbes **I16'** et **I16**.

La **Figure 5B** illustre l'image **I16'** d'une surface de bague réelle dont l'axe central théorique **A1** est par exemple décalé radialement et/ou incliné par rapport à l'axe d'installation **A'1**. Dans ce cas l'image théorique de bague **I16** n'est pas une image parfaitement circulaire, mais une courbe fermée décentrée par rapport à l'image de l'axe d'installation **IA'1**. La courbe fermée **I16** est par exemple sensiblement en forme d'oblong. On peut déterminer pour cette courbe fermée **I16** un isobarycentre **IA1**, et, à partir de cet isobarycentre **IA1**, déterminer une différence de distance entre un point de l'image **I16'** d'une surface de bague réelle et un point correspondant, de même coordonnée angulaire, dans l'image théorique de bague **I16**. Cette distance permet de déterminer un défaut de planéité. Alternativement, on peut déterminer la transformation géométrique permettant de ramener l'image théorique de bague **I16** à un cercle centré, et appliquer cette transformation à l'image de bague réelle **I16'**, et se ramener ainsi au cas de la **Figure 5A** en ayant éliminé les écarts dus au défaut de décentrement et/ou d'inclinaison.

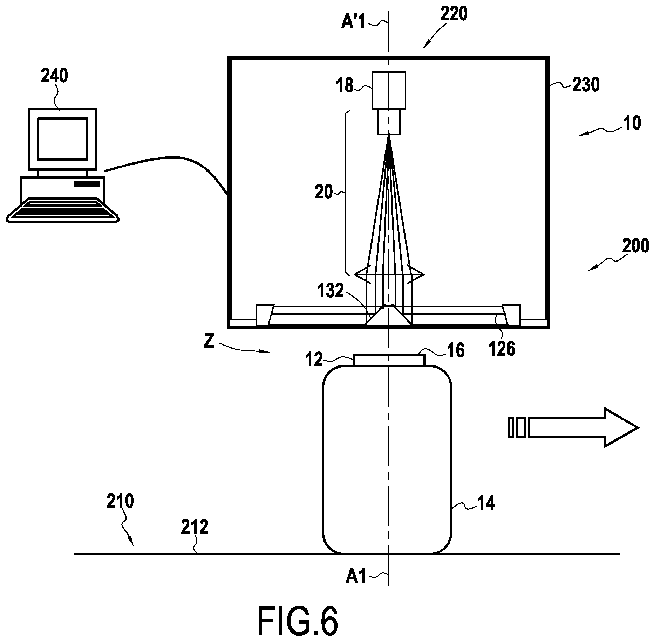

On a illustré sur la **Figure 6** une ligne d'inspection **200** de récipients **14** mettant en œuvre un dispositif **10** selon l'invention. Dans l'exemple illustré, des récipients **14** sont déplacés par un convoyeur **210** qui transporte les récipients **14** selon une direction de déplacement, par exemple de translation horizontale perpendiculaire à l'axe central théorique **A1** des récipients 14. Dans l'exemple illustré, le convoyeur **210** comporte un tapis convoyeur **212** sur lequel les récipients **14** sont posés par leur surface de fond, aussi appelé plan de pose, avec leur axe central théorique **A1** agencé verticalement. Le convoyeur pourrait comporter une roue de convoyage déplaçant les récipients **14** selon une trajectoire de déplacement circulaire, notamment dans un plan horizontal. Le convoyeur **210** pourrait aussi comporter des moyens de guidage (non représentés) coopérant avec les faces latérales des récipients **14**. Les récipients **14** présentent ainsi leur surface de bague **16** dans un plan horizontal tourné vers le haut. Le convoyeur **210** amène les récipients selon la trajectoire horizontale en dessous du dispositif **10** selon invention, sans risque d'interférence avec le dispositif **10**. Le dispositif **10** peut comprendre un boîtier **230** incorporant notamment le capteur **18**, le système objectif **20** une surface de réflexion primaire **126** et éventuellement une surface de réflexion de renvoi **132** comme illustrée sur la **Figure 6**. Le boîtier **230** est agencé au-dessus du convoyeur. À l'intérieur du boîtier **230**, un dispositif **10** selon l'invention est agencé avec son axe d'installation **A'1** en position verticale, de telle sorte que le champ d'observation et le faisceau lumineux incident sont orientés vers le bas, vers la zone d'installation **Z** qui se situe entre la face inférieure du boîtier de **130** et le tapis convoyeur **212**. On comprend donc que, au niveau de cette station, le convoyeur **210** amène les récipients de manière à ce que leur axe central théorique **A1** coïncide au mieux avec l'axe d'installation **A'1**. Au moment de cette coïncidence, une image est acquise grâce au dispositif 10, sans que cela nécessite ni une manutention du récipient ni un arrêt du convoyeur. L'image acquise par le dispositif **10** peut ensuite être envoyée à un système de traitement **240**, par exemple un dispositif de traitement d'images et/ou un dispositif de visualisation et/ou un dispositif de stockage d'images, par exemple un système informatique comprenant un ordinateur. Il est alors possible d'analyser l'image ainsi acquise et de pouvoir identifier, voire quantifier, dans cette image, un éventuel défaut de planéité de la surface de bague **16** du récipient **14**.

Le dispositif et le procédé sont donc sans contact physique avec le récipient à contrôler. Un dispositif selon l'invention se révèle moins onéreux et d'encombrement plus faible que les dispositifs de l'art antérieur, permettant notamment son installation aisée dans une station ou ligne d'inspection d'articles, station ou ligne d'inspection qui peut comporter d'autres dispositifs destinés à d'autres contrôles, et la station ou ligne d'inspection peut ainsi être installée notamment dans une ligne de production où les récipients circulent à la chaîne. Un tel dispositif permet alors le contrôle de récipients en ligne, que ce soit sur une ligne de production des récipients, ou sur une ligne de traitement des récipients, ou sur une ligne de remplissage.

Le dispositif et le procédé selon l'invention peuvent être mis en œuvre avec un seul capteur photoélectrique bidimensionnel, par exemple une seule caméra, et tout de même donner une information sur la planéité de l'intégralité de la surface de bague, ceci à partir d'une seule image bidimensionnelle optique, directement acquise par le capteur, et non pas à partir de plusieurs images optiques acquises distinctement.

Le système d'observation selon l'invention est présenté ici dans des réalisations préférées dans lesquelles les surfaces réfléchissantes sont des miroirs. Il est envisageable d'obtenir les mêmes résultats en utilisant des éléments optiques de type prismes, présentant des surfaces également coniques par exemple, provoquant des réflexions totales. Un élément optique au sens de l'invention peut comporter une lentille de Fresnel. De tels moyens permettent également une observation avec les mêmes valeurs de l'angle γ, et on peut concevoir par ces moyens des observations télécentriques ou non.

L'invention n'est pas limitée aux exemples décrits et représentés car diverses modifications peuvent y être apportées sans sortir de son cadre.

**Revendications**

1. Procédé de visualisation de la planéité d'une surface de bague réelle **(16)** d'un récipient **(14)**, la surface de bague ayant une géométrie théorique plane et annulaire ou circulaire autour d'un axe central théorique **(A1)**, du type comportant les étapes consistant:

   - à éclairer la surface de bague réelle **(16)** du récipient à l'aide d'un faisceau lumineux incident périphérique,
   - à former, par l'intermédiaire d'un système optique **(24, 124),** une image plane de la surface de bague du récipient, sur un capteur photoélectrique bidimensionnel **(18)**,
   **caractérisé en ce que** :

     - le faisceau lumineux incident périphérique comprend des rayons lumineux radiaux contenus dans un plan radial contenant l'axe central théorique **(A1)**, lesdits rayons radiaux étant dirigés vers l'axe central théorique **(A1)**,
     - le faisceau lumineux incident périphérique éclaire la surface de bague **(16)** par au-dessus, et des rayons radiaux du faisceau lumineux incident sont réfléchis par réflexion spéculaire sur la surface de bague **(16)**,
     - le système optique **(24, 124)** comporte une surface primaire de réflexion **(26, 126)**, la surface primaire de réflexion **(26, 126)** étant une surface de révolution axée sur l'axe central théorique **(A1)** et agencée pour réfléchir directement ou indirectement des rayons lumineux, provenant de la surface de bague réelle sous l'angle d'élévation d'observation, en direction du capteur.
     - le procédé comporte l'étape d'observer la surface de bague réelle **(16),** par le système optique **(24, 124),** sous un angle d'élévation d'observation (γ) inférieur à 25° par rapport à un plan perpendiculaire à l'axe central théorique **(A1)**.
     - **en ce que** l'étape consistant à former un image plane comporte une transformation géométrique optique qui convertit la surface de bague réelle **(16)** en une image de surface de bague **(I16'),** cette transformation convertissant théoriquement la surface de bague théorique en une image théorique de surface de bague (**I16**),

- **en ce que** la transformation géométrique optique convertit une différence de hauteur réelle **(dZ),** selon la direction de l'axe central théorique (**A1**), entre un point considéré (**T'**) de la surface de bague réelle (**16**) et un point correspondant (**T**) la surface de bague théorique, en un décalage radial image (**dR**), sur l'image, du point image (**IT'**) de l'image de surface de bague du récipient par rapport au point image correspondant (**IT**) de l'image théorique de surface de bague,

- et **en ce que**, dans l'image plane, le décalage radial image (**dR**) correspondant à une différence de hauteur réelle (**dZ**) unitaire est supérieur au décalage radial image correspondant à un décalage radial réel de même dimension entre ledit point considéré (**T'**) de la surface de bague réelle et un point correspondant (**T**) la surface de bague théorique.

2. Procédé de visualisation selon la revendication 1, **caractérisé en ce que** le décalage radial image (**dR**) correspondant à une différence de hauteur réelle (**dZ**) unitaire est au moins 3 fois supérieur au décalage radial image correspondant à un décalage radial réel de même dimension entre un point considéré de la surface de bague réelle et un point correspondant à la surface de bague théorique.

3. Procédé de visualisation selon la revendication 1, **caractérisé en ce que** le procédé comporte l'étape d'observer la surface de bague réelle (**16**), par le système optique (**24, 124**), sous un angle d'élévation d'observation (γ) inférieur à 18,43° par rapport à un plan perpendiculaire à l'axe central théorique (**A1**).

4. Procédé de visualisation selon l'une quelconque des revendications précédentes, **caractérisé en ce que** le système optique (**24, 124**) définit un champ d'observation périphérique qui observe la surface de bague (**16**) selon des rayons d'observation radiaux qui sont contenus dans un plan radial contenant l'axe central théorique (**A1**) et qui forment par rapport à un plan perpendiculaire à l'axe central théorique (**A1**) un angle central théorique inférieur à 25°.

5. Procédé de visualisation selon la revendication 4, **caractérisé en ce que** l'angle d'élévation d'observation est inférieur à 18,43° par rapport à un plan perpendiculaire à l'axe central théorique.

6. Procédé de visualisation selon l'une quelconque des revendications précédentes, **caractérisé en ce que** l'étape consistant à former une image plane (**I**) inclut la formation optique d'une image bidimensionnelle complète et continue (**I16'**) de la surface de bague réelle (**16**).

7. Procédé de visualisation selon l'une quelconque des revendications précédentes, **caractérisé en ce que** le faisceau incident éclaire la surface de bague sous une incidence telle que, au point de réflexion d'un rayon incident, dont le rayon réfléchi par la surface de bague réelle (**16**) est vu par le capteur, la normale (« **n** ») à la surface de bague (**16**) forme un angle inférieur à 30° par rapport à la direction de l'axe central théorique (**A1**).

8. Procédé de détermination de la planéité d'une surface de bague réelle (**16**) d'un récipient (**14**), la surface de bague (**16**) ayant une géométrie théorique plane et annulaire autour d'un axe central théorique (**A1**), **caractérisé en ce que** le procédé comporte le procédé de visualisation selon l'une des revendications précédentes, et **en ce que** le procédé comporte une étape de détermination comportant la détermination d'un décalage radial image (**dR**) entre une ligne (**I16'**) représentative de l'image de la surface de bague (**16**) et une ligne théorique (**I16**) représentative de l'image théorique de surface de bague.

9. Dispositif de visualisation de la planéité d'une surface de bague réelle (**16**) d'un récipient (**14**), la surface de bague ayant une géométrie théorique plane et annulaire ou circulaire autour d'un axe central théorique (**A1**), du type dans lequel le dispositif (**10**) présente une zone d'installation d'un récipient, cette zone d'installation ayant un axe d'installation (**A'1**), du type comprenant :

   - un système d'éclairage (**28, 140**) apte à fournir un faisceau lumineux incident périphérique comprenant des rayons radiaux contenus dans un plan radial contenant l'axe d'installation (**A'1**), lesdits rayons radiaux étant dirigés vers l'axe d'installation (**A'1**),
   - un capteur photo électrique bidimensionnel (**18**),
   - un système optique (**24, 124**) interposé entre la zone d'installation du récipient et le capteur (**18**) apte à former sur le capteur (**18**) une image (**I16'**) de la surface de bague (**16**) d'un récipient (**14**) placé dans la zone d'installation,

   et du type dans lequel le système d'éclairage (**28, 140**), le capteur (**18**) et le système optique (**24, 124**) sont agencés au-dessus de la zone d'installation, **caractérisé en ce que** le dispositif (**10**) comporte une surface primaire de réflexion (**26, 126**), la surface primaire de réflexion (**26, 126**) étant une surface de révolution axée sur l'axe d'installation (**A'1**) et agencée pour réfléchir directement ou indirectement des rayons lumineux, provenant de la surface de bague réelle **(16)** sous l'angle d'élévation d'observation, en direction du capteur **(18)** ;

**en ce que** le système optique **(24, 124)** définit un champ d'observation périphérique qui observe la surface de bague **(16)** selon des rayons d'observations radiaux qui sont contenus dans un plan radial contenant l'axe d'installation **(A'1)**, et qui forment par rapport à un plan perpendiculaire à l'axe d'installation **(A'1)** un angle d'élévation d'observation inférieur à 25 degrés,

et **en ce que** le système d'éclairage comprend une source lumineuse **(28)** axée sur l'axe d'installation **(A'1)** et présentant un diamètre supérieur au diamètre de la surface de bague **(16)**.

10. Dispositif selon la revendication 9, **caractérisé en ce que** le dispositif comporte un capteur photoélectrique bidimensionnel **(18)** unique sur lequel est formée une image complète et continue (**I16'**) de la surface de bague réelle **(16)**.

11. Dispositif selon l'une des revendications 9 ou 10, **caractérisé en ce que** la surface primaire de réflexion **(126)** réfléchit indirectement des rayons lumineux en direction du capteur **(18)**, et **en ce que** le dispositif comporte, entre la surface primaire de réflexion **(126)** et le capteur **(18)**, au moins une seconde surface de réflexion **(132)**.

12. Dispositif selon l'une des revendications 9 ou 10, **caractérisé en ce que** la surface primaire de réflexion **(26)** comporte une surface de révolution, tournée à l'opposé de l'axe d'installation, et présentant un petit diamètre et un grand diamètre tous les deux inférieurs au diamètre le plus petit de la surface de bague théorique.

13. Dispositif selon la revendication 12, **caractérisé en ce que** la surface primaire de réflexion **(26)** est une surface tronconique convexe et présente un demi-angle au sommet ($\alpha$) égal à 45° moins la moitié de l'angle d'élévation d'observation ($\gamma$).

14. Dispositif selon l'une des revendications 9 ou 10, **caractérisé en ce que** la surface primaire de réflexion **(126)** comporte une surface de révolution, tournée vers l'axe d'installation **(A'1)**, présentant un petit diamètre et un grand diamètre tous les deux supérieurs au diamètre le plus grand de la surface de bague théorique de manière à renvoyer, en direction de l'axe d'installation **(A'1)**, des rayons lumineux, provenant de la surface de bague réelle **(16)** sous l'angle d'élévation d'observation ($\gamma$), lesdits rayons étant interceptés par une surface de réflexion de renvoi **(132)** qui comporte une surface de révolution **(132)** tournée à l'opposé de l'axe d'installation

**(A'1)** de manière à renvoyer les rayons en direction du capteur **(18)**.

15. Dispositif selon l'une des revendications 11 ou 14, **caractérisé en ce que** la trajectoire des rayons entre la surface primaire de réflexion **(126)** et la surface de réflexion de renvoi **(132)** est perpendiculaire à l'axe d'installation **(A'1)**.

16. Dispositif selon la revendication 15, **caractérisé en ce que** la surface de réflexion de renvoi **(132)** comporte une surface de révolution tronconique convexe qui est axée sur l'axe d'installation **(A'1)** et qui présente un demi-angle au sommet ($\beta$) de 45°.

17. Dispositif selon l'une quelconque des revendications 14 à 16, **caractérisé en ce qu'**il comporte, entre le capteur **(18)** et la surface primaire de réflexion **(126)**, un système optique télécentrique **(20)**.

18. Ligne d'inspection **(200)** de récipients **(14)** présentant une surface de bague **(16)**, du type dans laquelle des récipients **(14)** sont déplacés sur une ligne de convoyage par un convoyeur **(210)** qui transporte les récipients **(14)** selon une direction de déplacement horizontale perpendiculaire à un axe central théorique (A1) des récipients **14** qui présentent ainsi leur surface de bague **(16)** dans un plan horizontal tourné vers le haut, **caractérisée en ce que** l'installation comporte un dispositif **(10)** selon l'une quelconque des revendications 9 à 17, qui est agencé sur l'installation avec son axe d'installation **(A'1)** en position verticale, de telle sorte que le champ d'observation et le faisceau lumineux incident sont orientés vers le bas, vers la zone d'installation **(Z)** qui se situe entre le dispositif et un organe de transport du convoyeur **(212)**.

**Patentansprüche**

1. Verfahren zum Sichtbarmachen der Ebenheit einer realen Ringoberfläche **(16)** eines Behälters **(14)**, wobei die Ringoberfläche eine ebene und ringförmige oder kreisförmige theoretische Geometrie um eine theoretische Mittelachse (A1) aufweist, des Typs, umfassend die Schritte, die darin bestehen:

    - die reale Ringoberfläche **(16)** des Behälters **(14)** mit Hilfe eines peripher einfallenden Lichtbündels zu beleuchten,
    - über ein optisches System **(24, 124)** ein flaches Bild der Ringoberfläche des Behälters auf einem zweidimensionalen photoelektrischen Sensor **(18)** zu bilden,
    **dadurch gekennzeichnet, dass:**

      - das peripher einfallende Lichtbündel radiale Lichtstrahlen aufweist, die in einer radialen Ebene enthalten sind, die die theoretische Mittelachse (A1) enthält, wobei die radialen Strahlen in Richtung der theoretischen Mittelachse (A1) gerichtet sind,

- das peripher einfallende Lichtbündel die Ringoberfläche (16) von oben beleuchtet und radiale Strahlen des einfallenden Lichtbündels durch Spiegelreflexion auf die Ringoberfläche (16) reflektiert werden,

- das optische System (24, 124) eine primäre Reflexionsfläche (26, 126) aufweist, wobei die primäre Reflexionsfläche (26, 126) eine Rotationsfläche ist, die entlang der theoretischen Mittelachse (A1) ausgerichtet ist und ausgebildet ist, um Lichtstrahlen, die von der realen Ringoberfläche kommen, direkt oder indirekt unter dem Beobachtungselevationswinkel in Richtung des Sensors zu reflektieren,

- das Verfahren den Schritt des Beobachtens der realen Ringoberfläche (16) durch das optische System (24, 124) unter einem Beobachtungselevationswinkel ($\gamma$) von weniger als 25° in Bezug auf eine Ebene, die senkrecht zur theoretischen Mittelachse (A1) ist, aufweist,

- dadurch, dass das Verfahren darin besteht, ein flaches Bild zu bilden, das eine optische geometrische Transformation aufweist, die die reale Ringoberfläche (16) in ein Bild der Ringoberfläche (I16') umwandelt, wobei diese Transformation die theoretische Ringoberfläche theoretisch in ein theoretisches Bild der Ringoberfläche (I16) umwandelt,

- dadurch, dass die optische geometrische Transformation einen realen Höhenunterschied (dZ) in Richtung der theoretischen Mittelachse (A1) zwischen einem betrachteten Punkt (T') der realen Ringoberfläche (16) und einem entsprechenden Punkt (T) der theoretischen Ringoberfläche in einen radialen Bildversatz (dR) auf dem Bild von dem Bildpunkt (IT') des Bildes der Ringoberfläche des Behälters gegenüber dem entsprechenden Bildpunkt (IT) des theoretischen Bildes der Ringoberfläche umwandelt,

- und dadurch, dass der radiale Bildversatz (dR) in dem flachen Bild, der einem einheitlichen realen Höhenunterschied (dZ) entspricht, größer als der radiale Bildversatz ist, der einem realen radialen Bildversatz der gleichen Abmessung zwischen dem betrachteten Punkt (T') der realen Ringoberfläche und einem entsprechenden Punkt (T) der theoretischen Ringoberfläche entspricht.

2. Verfahren zum Sichtbarmachen nach Anspruch 1, **dadurch gekennzeichnet, dass** der radiale Bildversatz (dR), der einem einheitlichen realen Höhenunterschied (dZ) entspricht, mindestens 3-mal größer als der radiale Bildversatz ist, der einem realen radialen Bildversatz der gleichen Abmessung zwischen einem betrachteten Punkt der realen Ringoberfläche und einem entsprechenden Punkt der theoretischen Ringoberfläche entspricht.

3. Verfahren zum Sichtbarmachen nach Anspruch 1, **dadurch gekennzeichnet, dass** das Verfahren den Schritt des Beobachtens der realen Ringoberfläche (16) durch das optische System (24, 124) unter einem Beobachtungselevationswinkel ($\gamma$) von weniger als 18,43° in Bezug auf eine Ebene, die senkrecht zur theoretischen Mittelachse (A1) ist, aufweist.

4. Verfahren zum Sichtbarmachen nach einem der vorhergehenden Ansprüche, **dadurch gekennzeichnet, dass** das optische System (24, 124) ein peripheres Beobachtungsfeld definiert, das die Ringoberfläche (16) nach radialen Beobachtungsradien beobachtet, die in einer radialen Ebene enthalten sind, die die theoretische Mittelachse (A1) enthält, und die in Bezug auf eine Ebene, die senkrecht zur theoretischen Mittelachse (A1) ist, einen theoretischen Mittelwinkel bilden, der kleiner als 25° ist.

5. Verfahren zum Sichtbarmachen nach Anspruch 4, **dadurch gekennzeichnet, dass** der Beobachtungselevationswinkel kleiner als 18,43° in Bezug auf eine Ebene ist, die senkrecht zur theoretischen Mittelachse ist.

6. Verfahren zum Sichtbarmachen nach einem der vorhergehenden Ansprüche, **dadurch gekennzeichnet, dass** der Schritt, der darin besteht, ein flaches Bild (I) zu bilden, das optische Bilden eines vollständigen und kontinuierlichen zweidimensionalen Bildes (I16') der realen Ringoberfläche (16) enthält.

7. Verfahren zum Sichtbarmachen nach einem der vorhergehenden Ansprüche, **dadurch gekennzeichnet, dass** der einfallende Strahl die Ringoberfläche unter einem derartigen Einfallswinkel beleuchtet, dass die Normale ("n") zur Ringoberfläche (16) am Punkt der Reflexion eines einfallenden Strahls, dessen Strahl, der von der realen Ringoberfläche (16) reflektiert wird, von dem Sensor gesehen wird, einen Winkel von weniger als 30° in Bezug auf die Richtung der theoretischen Mittelachse (A1) bildet.

8. Verfahren zum Bestimmen der Ebenheit einer realen Ringoberfläche (16) eines Behälters (14), wobei die Ringoberfläche (16) eine ebene und ringförmige theoretische Geometrie um eine theoretische Mittelachse (A1) aufweist, **dadurch gekennzeichnet, dass** das Verfahren das Verfahren zum Sichtbarmachen nach einem der vorhergehenden Ansprüche aufweist und dadurch, dass das Verfahren einen Schritt zum Bestimmen aufweist, der das Bestimmen eines radialen Bildversatzes (dR) zwischen einer Linie (I16'), die für das Bild der Ringoberfläche (16) repräsentativ ist, und einer theoretischen Linie (I16), die für das theoretische Bild der Ringoberfläche repräsentativ ist, aufweist.

9. Vorrichtung zum Sichtbarmachen der Ebenheit einer realen Ringoberfläche (16) eines Behälters (14), wobei die Ringoberfläche eine ebene und ringförmige oder kreisförmige theoretische Geometrie um eine theoretische Mittelachse (A1) aufweist, des Typs, wobei die Vorrichtung (10) einen Bereich zum Anordnen eines Behälters aufweist, wobei dieser Bereich zum Anordnen eine Anordnungsachse (A'1) des Typs aufweist, umfassend:

    - ein Beleuchtungs system (28, 140), dass geeignet ist, ein peripher einfallendes Lichtbündel bereitzustellen, das radiale Strahlen aufweist, die in einer radialen Ebene enthalten sind, die die Anordnungsachse (A'1) enthält, wobei die radialen Strahlen in Richtung der Anordnungsachse (A'1) gerichtet sind,
    - einen zweidimensionalen photoelektrischen Sensor (18),
    - ein optisches System (24, 124), das zwischen dem Bereich zum Anordnen des Behälters und dem Sensor (18) angeordnet ist, das geeignet ist, auf dem Sensor (18) ein Bild (I16') der Ringoberfläche (16) eines Behälters (14) zu bilden, der in dem Bereich zum Anordnen angeordnet ist,

und des Typs, wobei das Beleuchtungssystem (28, 140), der Sensor (18) und das optische System (24, 124) über dem Bereich zum Anordnen angeordnet sind,

    **dadurch gekennzeichnet, dass** das optische System (10) eine primäre Reflexionsfläche (26, 126) aufweist, wobei die primäre Reflexionsfläche (26, 126) eine Rotationsfläche ist, die entlang der Anordnungsachse (A'1) ausgerichtet ist und ausgebildet ist, um die Lichtstrahlen, die von der realen Ringoberfläche (16) kommen, direkt oder indirekt unter dem Beobachtungselevationswinkel in Richtung des Sensors (18) zu reflektieren,
    und dadurch, dass das optische System (24, 124) ein peripheres Beobachtungsfeld definiert, das die Ringoberfläche (16) nach radialen Beobachtungsradien beobachtet, die in einer radialen Ebene enthalten sind, die die Anordnungsachse (A'1) enthält, und die in Bezug auf eine Ebene, die senkrecht zur Anordnungsachse (A'1) ist, einen Beobachtungselevationswinkel bilden, der kleiner als 25 Grad ist,
und dadurch, dass das Beleuchtungssystem eine Lichtquelle (28) aufweist, die entlang der Anordnungsachse (A'1) ausgerichtet ist und einen Durchmesser aufweist, der größer ist als der Durchmesser der Ringoberfläche (16).

10. Vorrichtung nach Anspruch 9, **dadurch gekennzeichnet, dass** die Vorrichtung einen einzigen zweidimensionalen photoelektrischen Sensor (18) aufweist, auf dem ein vollständiges und kontinuierliches zweidimensionales Bild (I16') der realen Ringoberfläche (16) gebildet wird.

11. Vorrichtung nach einem der Ansprüche 9 oder 10, **dadurch gekennzeichnet, dass** die primäre Reflexionsfläche (126) Lichtstrahlen indirekt in Richtung des Sensors (18) reflektiert, und dadurch, dass die Vorrichtung zwischen der primären Reflexionsfläche (126) und dem Sensor (18) mindestens eine zweite Reflexionsfläche (132) aufweist.

12. Vorrichtung nach eine m der Ansprüche 9 oder 10, **dadurch gekennzeichnet, dass** die primäre Reflexionsfläche (26) eine Rotationsfläche aufweist, die von der Anordnungsachse abgewandt ist und einen kleinen und einen großen Durchmesser aufweist, die beide kleiner als der kleinste Durchmesser der theoretischen Ringoberfläche sind.

13. Vorrichtung nach Anspruch 12, **dadurch gekennzeichnet, dass** die primäre Reflexionsfläche (26) eine konvexe kegelstumpfförmige Oberfläche ist und einen halben Scheitelwinkel ($\alpha$) aufweist, der gleich 45° minus der Hälfte des Beobachtungselevationswinkels ($\gamma$) ist.

14. Vorrichtung nach einem der Ansprüche 9 oder 10, **dadurch gekennzeichnet, dass** die primäre Reflexionsfläche (126) eine Rotationsfläche aufweist, die der Anordnungsachse (A'1) zugewandt ist, die einen kleinen und einen großen Durchmesser aufweist, die beide größer als der größte Durchmesser der theoretischen Ringoberfläche sind, derart, um Lichtstrahlen in Richtung der Anordnungsachse (A'1), die von der realen Ringoberfläche (16) kommen, unter dem Beobachtungselevationswinkels ($\gamma$) umzulenken, wobei die Strahlen von einer Reflexionsoberfläche zum Umlenken (132) abgefangen werden, die eine Rotationsfläche (132) aufweist, die von der Anordnungsachse (A'1) derart abgewandt ist, um die Strahlen in Richtung des Sensors (18) umzulenken.

15. Vorrichtung nach eine m der Ansprüche 11 oder 14, **dadurch gekennzeichnet, dass** der Strahlengang zwischen der primären Reflexionsfläche (126) und der Reflexionsoberfläche zum Umlenken (132) senkrecht zu der Anordnungsachse (A'1) ist.

16. Vorrichtung nach Anspruch 15, **dadurch gekennzeichnet, dass** die Reflexionsoberfläche zum Umlenken (132) eine konvexe kegelstumpfförmige Oberfläche aufweist, die entlang der Anordnungsachse (A'1) ausgerichtet ist und die einen halben Scheitelwinkel (β) von 45° aufweist.

17. Vorrichtung nach einem der Ansprüche 14 bis 16, **dadurch gekennzeichnet, dass** sie zwischen dem Sensor (18) und der primären Reflexionsfläche (126) ein telezentrisches optisches System (20) aufweist.

18. Linie zum Inspizieren (200) von Behältern (14), die eine Ringoberfläche (16) aufweisen, des Typs, wobei Behälter (14) auf einer Förderlinie durch einen Förderer (210) bewegt werden, der die Behälter (14) in einer horizontalen Bewegungsrichtung, die senkrecht zu einer theoretischen Mittelachse (A1) der Behälter (14) ist, transportiert, die somit ihre Ringoberfläche (16) in einer horizontalen Ebene, die nach oben gerichtet ist, aufweisen, **dadurch gekennzeichnet, dass** die Anlage eine Vorrichtung (10) nach einem der Ansprüche 9 bis 17 aufweist, die auf der Anlage mit ihrer Anordnungsachse (A'1) in einer vertikalen Position derart angeordnet ist, dass das Beobachtungsfeld und das einfallende Lichtbündel nach unten in Richtung des Bereichs zum Anordnen (Z) gerichtet sind, der sich zwischen der Vorrichtung und einem Transportorgan des Förderers (212) befindet.

**Claims**

1. A visualization method for visualizing the planeness of a real ring surface (16) of a container (14), the ring surface having a theoretical shape that is plane and annular or circular around a theoretical central axis (A1), and the method being of the type comprising the steps consisting in:

    - • lighting the real ring surface (16) of the container with a peripheral incident light beam; and
    - • using an optical system (24, 124) to form a plane image of the ring surface of the container on a two-dimensional photoelectric sensor (18); the method being **characterized in that**:

      - the peripheral incident light beam comprises radial light rays contained in a radial plane containing the theoretical central axis (A1), said radial rays being directed towards the theoretical central axis (A1);

- the peripheral incident light beam lights the ring surface (16) from above, and radial rays of the incident light beam are reflected by specular reflection the ring surface (16);
- the optical system (24, 124) includes a primary reflection surface (26, 126), the primary reflection surface (26, 126) being a surface of revolution having the theoretical central axis (A1) as its axis and arranged to reflect light rays coming from the real ring surface at the observation elevation angle directly or indirectly towards the sensor;
- the method includes the step of observing the real ring surface (16) by means of the optical system (24, 124) at an observation elevation angle (γ) of less than 25° relative to a plane perpendicular to the theoretical central axis (A1);

    • **in that** the step consisting in forming a plane image includes an optical geometrical transformation that converts the real ring surface (16) into a ring surface image (I16'), this transformation theoretically converting the theoretical ring surface into a theoretical ring surface image (I16);
    • **in that** the optical geometrical transformation converts a real height difference (dZ) along the direction of the theoretical central axis (A1) between a point under consideration (T') of the real ring surface (16) and a corresponding point (T) of the theoretical ring surface into an image radial offset (dR) in the image of the image point (IT') of the ring surface image of the container relative to the corresponding image point (IT) of the theoretical ring surface image; and
    • **in that**, in the plane image, the image radial offset (dR) corresponding to a unit real height difference (dZ) is greater than the image radial offset corresponding to a real radial offset of the same dimension between said point under consideration (T') of the real ring surface and a corresponding point (T) of the theoretical ring surface.

2. A visualization method according to claim 1, **characterized in that** the image radial offset (dR) corresponding to a unit real height difference (dZ) is at least three times greater than the image radial offset corresponding to a real radial offset of the same dimension between a point under consideration of the real ring surface and a corresponding point of the theoretical ring surface.

**3.** A visualization method according to claim 1, **characterized in that** the method includes the step of observing the real ring surface (16) by means of the optical system (24, 124) at an observation elevation angle ($\gamma$) of less than 18.43° relative to a plane perpendicular to the theoretical central axis (A1).

**4.** A visualization method according to any preceding claim, **characterized in that** the optical system (24, 124) defines a peripheral observation field that observes the ring surface (16) by radial observation rays that are contained in a radial plane containing the theoretical central axis (A1) and forming, relative to a plane perpendicular to the theoretical central axis (A1), a theoretical central angle of less than 25°.

**5.** A visualization method according to claim 4, **characterized in that** the observation elevation angle is less than 18.43° relative to a plane perpendicular to the theoretical central axis.

**6.** A visualization method according to any preceding claim, **characterized in that** the step consisting in forming a plane image (I) includes optically forming a complete and continuous two-dimensional image (I16') of the real ring surface (16).

**7.** A visualization method according to any preceding claim, **characterized in that** the incident beam lights the ring surface at an angle of incidence such that, at the point of reflection of an incident ray giving rise to a ray reflected by the real ring surface (16) that is seen by the sensor, the normal ("n") to the ring surface (16) forms an angle of less than 30° relative to the direction of the theoretical central axis (A1).

**8.** A method of determining the planeness of a real ring surface (16) of a container (14), the ring surface (16) having a theoretical shape that is plane and annular about a theoretical central axis (A1), the method being **characterized in that** it includes the visualization method according to any preceding claim, and **in that** the method includes a determination step comprising determining an image radial offset (dR) between a line (I16') representative of the image of the ring surface (16) and a theoretical line (I16) representative of the theoretical image of the ring surface.

**9.** A display device for viewing the planeness of a real ring surface (16) of a container (14), the ring surface having a theoretical shape that is plane and annular or circular around a theoretical central axis (A1), the device (10) being of the type in which it presents an installation zone for installing a container, said installation zone having an installation axis (A'1), of the type comprising:

    - a lighting system (28, 140) suitable for supplying a peripheral incident light beam having radial rays contained in a radial plane containing the installation axis (A'1), said radial rays being directed towards the installation axis (A'1);
    - a two-dimensional photoelectric sensor (18); and
    - an optical system (24, 124) interposed between the container installation zone and the sensor (18) and suitable for forming on the sensor (18) an image (116') of the ring surface (16) of a container (14) placed in the installation zone;

and of the type in which the lighting system (28, 140), the sensor (18), and the optical system (24, 124) are arranged above the installation zone;
the device being **characterized in that** the device (10) includes a primary reflection surface (26, 126), the primary reflection surface (26, 126) being a surface of revolution having the installation axis (A'1) as its axis and arranged to reflect light rays coming from the real ring surface (16) at an observation elevation angle directly or indirectly towards the sensor (18);
**in that** the optical system (24, 124) defines a peripheral observation field that observes the ring surface (16) with radial observation rays that are contained in a radial plane containing the installation axis (A'1) and that form an observation elevation angle of less than 25 degrees relative to a plane perpendicular to the installation axis (A'1); and
**in that** the lighting system comprises a light source (28) having the installation axis (A'1) as its axis and presenting a diameter greater than the diameter of the ring surface (16).

**10.** A device according to claim 9, **characterized in that** the device includes a single two-dimensional photoelectric sensor (18) on which a complete and continuous image (I16') of the real ring surface (16) is formed.

**11.** A device according to one of claims 9 or 10, **characterized in that** the primary reflection surface (126) reflects light rays indirectly towards the sensor (18), and **in that** the device includes at least one second reflection surface (132) between the primary reflection surface (126) and the sensor (18).

**12.** A device according to one of claims 9 or 10, **characterized in that** the primary reflection surface (26) comprises a surface of revolution facing away from the installation axis and presenting a small diameter and a large diameter, both of which are smaller than the smallest diameter of the theoretical ring surface.

**13.** A device according to claim 12, **characterized in that** the primary reflection surface (26) is a convex frustoconical surface presenting a half-angle at the

apex ($\alpha$) equal to 45° minus half the observation elevation angle ($\gamma$).

14. A device according to one of claims 9 or 10, **characterized in that** the primary reflection surface (126) comprises a surface of revolution facing towards the installation axis (A'1) and presenting a small diameter and a large diameter, both of which are greater than the greatest diameter of the theoretical ring surface so as to deflect light rays coming from the real ring surface (16) at an observation elevation angle ($\gamma$) towards the installation axis (A'1), said rays being intercepted by a deflector reflection surface (132) that comprises a surface of revolution (132) facing away from the installation axis (A'1) so as to deflect the rays towards the sensor (18).

15. A device according to claim 11 or claim 14, **characterized in that** the path followed by the rays between the primary reflection surface (126) and the deflector reflection surface (132) is perpendicular to the installation axis (A'1).

16. A device according to claim 15, **characterized in that** the deflector reflection surface (132) comprises a convex frustoconical surface of revolution having the installation axis (A'1) as its axis and presenting a half-angle at the apex ($\beta$) of 45°.

17. A device according to any one of claims 14 to 16, **characterized in that** it includes a telecentric optical system (20) between the sensor (18) and the primary reflection surface (126).

18. An inspection line (200) for inspecting containers (14) each presenting a ring surface (16), the line being of the type in which the containers (14) are moved on a conveyor line by a conveyor (210) that transports the containers (14) in a horizontal travel direction perpendicular to a theoretical central axis (A1) of each container (14), such that the containers thus present their ring surfaces (16) in an upwardly-facing horizontal plane, the line being **characterized in that** the installation includes a device (10) according to any one of claims 9 to 17, that is arranged on the installation with its installation axis (A'1) in a vertical position, in such a manner that the observation field and the incident light beam are downwardly oriented towards the installation zone (Z) which is situated between the device and a transport member of the conveyor (212).

FIG.1A

FIG.1B

FIG.1C

FIG.2A

FIG.2B

FIG.3

FIG.4

I

I16

I16'

IA'1 = IA1

## FIG.5A

I

I16

IA1

IA'1

I16'

## FIG.5B

FIG.6

**EP 3 207 361 B1**

## RÉFÉRENCES CITÉES DANS LA DESCRIPTION

**Documents brevets cités dans la description**

- US 6172748 B
- DE 2916361
- US 4606635 A
- EP 0657732 A